# EUROPEAN PATENT SPECIFICATION

(11) **EP 0 579 172 B1**
(45) Date of publication and mention of the grant of the patent: **21.10.1998**
(21) Application number: 93111203.1
(22) Date of filing: 13.07.1993
(51) Int. Cl.: G11B 17/04

(54) **Apparatus with disc cartridge loading device**
Gerät mit Vorrichtung zum Laden von optischen Kassetten
Appareil avec dispositif de chargement de cassette à disque

(30) Priority: 13.07.1992 JP 207039/92; 24.08.1992 JP 245947/92
(43) Date of publication of application: 19.01.1994
(73) Proprietor: SONY CORPORATION, Tokyo (JP)
(72) Inventor: Aoki, Sunao, Shinagawa-ku, Tokyo (JP); Ohmori, Kiyoshi, Shinagawa-ku, Tokyo (JP); Mizutani, Takeshi, Shinagawa-ku, Tokyo (JP)
(74) Representative: Körber, Wolfhart, Dr.rer.nat.

(56) References cited:
- EP-A- 0 415 543
- EP-A- 0 427 330
- EP-A- 0 439 286
- US-A- 4 914 647
- US-A- 5 043 969

## Description

### BACKGROUND

### 1. Field of the Invention

This invention relates to a disc cartridge loading device. More particularly, it relates to a disc loading device applicable to a magneto-optical disc device for recording and/or reproducing information signals on or from a magneto-optical disc.

### 2. Background of the Invention

As disclosed for example in US Pat. No.4,945,433 in accordance with the preamble of claim 1, a magnetooptical disc recording/reproducing apparatus for recording and/or reproducing information signals on or from a magneto-optical disc rotatably contained within a disc cartridge includes a loading unit for transporting the disc cartridge to a predetermined loading position, a rotating driving unit for rotationally driving the magneto-optical disc at the loaded position, an optical pickup for writing and/or reading information signals on or from the magneto-optical disc, and an external magnetic field generating unit.

The loading unit has a cartridge holder for holding the disc cartridge, which cartridge holder is adapted for being moved by a cam or the like. The loading unit is so designed that the disc cartridge held by the cartridge holder is moved in a direction parallel to the chassis and, when the disc cartridge is transported to a point directly above the rotating and driving unit, the disc cartridge is lowered in a direction of approaching a chassis of the recording/reproducing apparatus. The magneto-optical disc, thus lowered in the direction of approaching the chassis, is held by the disc rotating and driving nit mounted on the chassis.

The disc rotating and driving unit includes a spindle motor and a disc table secured to a spindle shaft of the spindle motor. The disc rotating and driving unit holds the magneto-optical disc on the disc table and runs the disc into rotation in this condition.

On the other hand, the optical pickup and the external magnetic field generating unit are mounted at the positions facing each other with the magneto-optical disc placed on the disc table in-between. The external magnetic field generating unit is elevated or lowered relative to the disc cartridge by an actuator or the like until the disc cartridge is transported to a predetermined loading position and set on the disc table.

With the above-described magneto-optical disc device, since the disc cartridge needs to be elevated and lowered relative to the rotating and driving unit, not only the elevating and lowering mechanism becomes complicated in structure, but also it becomes necessary to provide a space within which the disc cartridge is to be moved in the vertical direction. Similarly, the external magnetic field generating device needs to be brought into and out of contact with the signal recording surface of the magneto-optical disc in conjunction with the disc cartridge loading operation. Similarly to the problem inherent in the disc cartridge elevating and lowering mechanism mentioned above, a problem is raised that the elevating and lowering mechanism for the external magnetic field becomes complicated and that it is necessary to provide a space within which the external magnetic field generating mechanism is to be moved in the vertical direction.

The space within which the disc cartridge or the external magnetic field generating unit is to be moved vertically represents a factor contributing to an increased thickness of a mechanical portion of the recording and/or reproducing apparatus. The result is that it is becoming difficult to reduce the size and thickness of the recording and/or reproducing apparatus for a magneto-optical disc which is progressively decreased in size from 12.7 cm (5 inch) through 8.9 cm (3.5 inch) to 6.35 cm (3.5 inch).

On the other hand, since the spindle motor is secured on the chassis, the spindle motor and the external magnetic field generating unit interfere with each other in frequency. The result is that it becomes occasionally impossible to perform recording and/or readout of information signals correctly on or from the magneto-optical disc.

### SUMMARY OF THE INVENTION

It is an object of the present invention to provide a disc cartridge loading device free from the above-mentioned problems.

It is another object of the present invention to provide a recording and/or reproducing apparatus which may be reduced in size and thickness.

The present invention provides a magneto-optical disc recording and/or reproducing apparatus containing a loading device for a disc cartridge. The loading device for the disc cartridge, comprising a disc rotatably contained in a cartridge main body, includes a rotating and driving unit for rotationally driving the disc contained in the disc cartridge, a positioning unit for setting the horizontal position of the disc cartridge by being engaged in the positioning opening formed in the disc cartridge, and a driving unit. The driving unit includes a first driving part for lifting and driving the rotating and driving unit and a second driving part for lifting and driving the positioning unit. The second driving part is driven at an earlier time than the first driving part so that the positioning unit is engaged in the positioning opening in the disc cartridge at an earlier time than the rotating and driving unit.

According to the present invention, since the positioning unit for positioning the disc cartridge is elevated for engaging the disc cartridge with the positioning unit at an earlier time than the rotating and driving unit rotationally driving the disc, disc clamping may be performed after the disc cartridge is set in position so that disc clamping operation may be achieved more easily.

Besides, since the mechanism for elevating the disc cartridge relative to the rotating and driving unit may be eliminated, the recording and/or reproducing apparatus may be reduced in size and thickness in its entirety.

### BRIEF DESCRIPTION OF THE DRAWINGS

Fig.1 is a perspective view of a disc cartridge, as viewed from an upper cartridge half.

Fig.2 is a perspective view of a disc cartridge, as viewed from a lower cartridge half.

Fig.3 is is an exploded perspective view showing a magneto-optical disc recording and/or reproducing apparatus according to a first embodiment of the present invention.

Fig.4 is a perspective view of a cartridge holder.

Fig.5 is a perspective view of a lifting unit for elevating and lowering a cartridge main body positioning unit and a disc rotating and driving unit.

Fig.6 is a plan view showing an interengaged state between a shutter opening pin and the disc cartridge in the loading state of the disc cartridge on the cartridge holder.

Fig.7 is a plan view showing the state in which a shutter member starts to be opened by the shutter opening pin in the loading state of the disc cartridge on the cartridge holder.

Fig.8 is a plan view showing the state in which the shutter member has been opened by the shutter opening pin in the loading state of the disc cartridge on the cartridge holder.

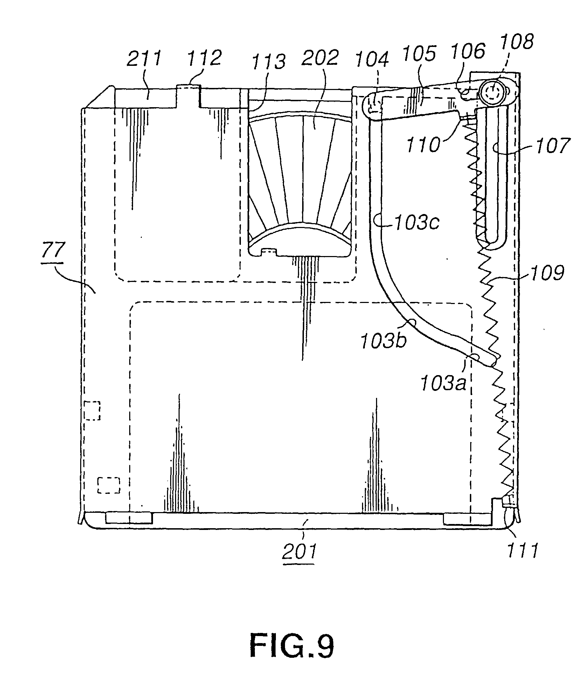

Fig.9 is a plan view showing the state in which the shutter member has been opened fully by the shutter opening pin in the loading state of the disc cartridge on the cartridge holder.

Fig. 10 is a plan view showing an operating state of the lifting unit in an unloaded state.

Fig. 11 is a right-hand side view showing an operating state of the lifting unit in an unloaded state.

Fig.12 is a left-hand side view showing an operating state of the lifting unit in an unloaded state.

Fig.13 is a plan view showing the lifting unit when a sliding member starts to be slid.

Fig.14 is a right-hand side view showing the lifting unit when a sliding member starts to be slid.

Fig.15 is a left-hand side view showing the lifting unit when a sliding member starts to be slid.

Fig.16 is a plan view showing an operating state of the lifting unit in the loaded state.

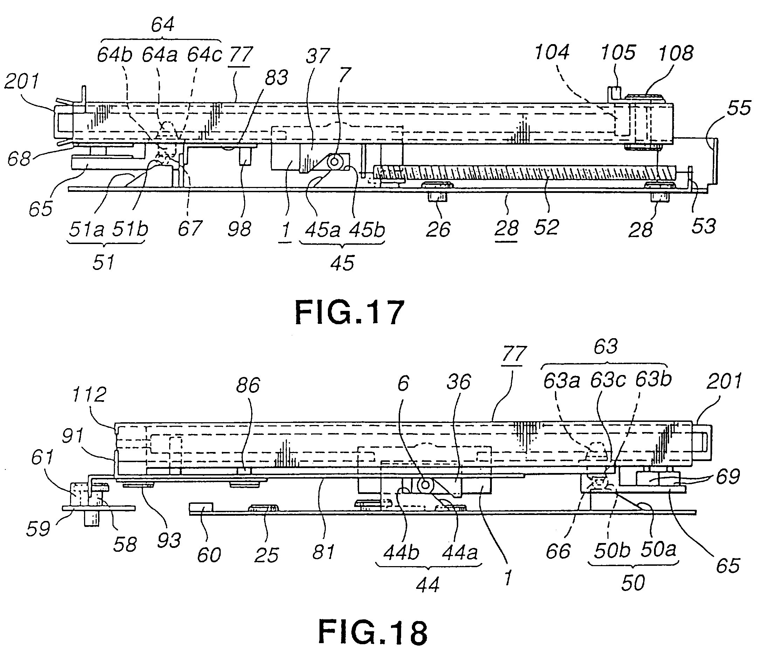

Fig.17 is a right-hand side view showing an operating state of the lifting unit in the loaded state.

Fig.18 is a left-hand side view showing an operating state of the lifting unit in the loaded state.

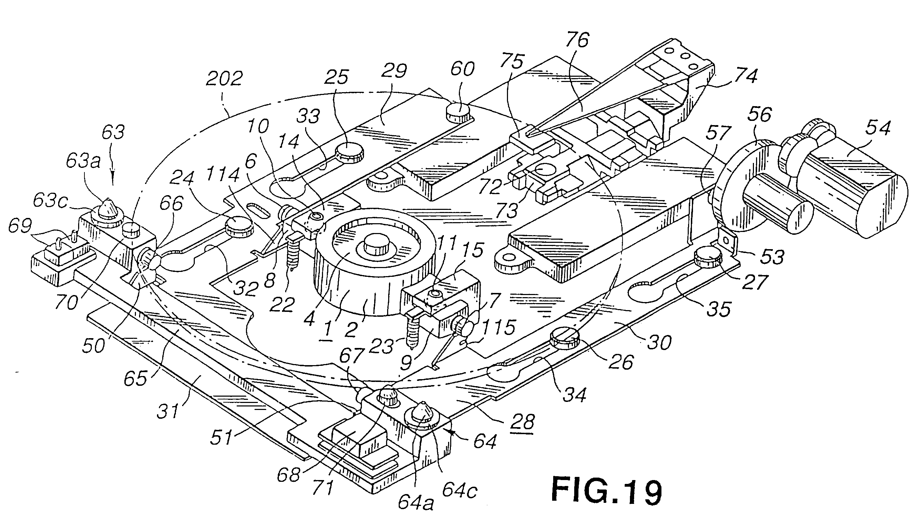

Fig.19 is a perspective view of a lifting unit in which a second cam of a first modification is provided on the sliding member.

Fig.20 is a plan view of a lifting unit in which a second cam of a first modification is provided on the sliding member.

Fig.21 is a right-hand side view of the lifting unit in which loading has been made by the lifting unit having the second cam of the modification 1 mounted on the slide member.

Fig.22 is a left-hand side view of the lifting unit in which loading has been made by the lifting unit having a second cam of the modification 1 mounted on the slide member.

Fig.23 is a side view showing the second cam of the modification 1 to an enlarged scale.

Fig.24 is a side view showing the state in which loading has been started by the lifting unit having the second cam of the modification 1 mounted on the slide member.

Fig.25 is a perspective view showing the spindle motor to an enlarged scale.

Fig.26 is an enlarged cross-sectional view of a positioning pin mounting member.

Fig.27 is a side view showing the state in which loading has been started by the lifting unit in which the second cam of the modification 2 is provided on the slide member.

Fig.28 is a perspective view of a lifting unit in which a second cam of a modification 3 is provided on a spindle supporting member.

Fig.29 is a plan view of the lifting unit in which the second cam of the modification 3 is provided on a spindle supporting member.

Fig.30 is a side view showing the state in which loading has been completed by the lifting unit in which the second cam of the modification 3 is provided on the spindle supporting member.

Fig.31 is an enlarged schematic perspective view showing an unloaded state of a magneto-optical disc recording and/or reproducing apparatus according to a second embodiment of the present invention, with a spring member mounted on the second cam.

Fig.32 is an enlarged schematic perspective view showing the loaded state with a spring member provided on the second cam.

Fig.33 is an exploded perspective view showing a magneto-optical disc recording and/or reproducing apparatus according to a third embodiment of the present invention.

Fig.34 is a perspective view showing a cartridge holder.

Fig.35 is a perspective view showing a lifting unit for elevating and lowering the cartridge positioning unit and the disc rotating and driving unit.

Fig.36 is a perspective view showing a chassis.

Fig.37 is an enlarged schematic perspective view showing a thrusting mechanism.

Fig.38 is an exploded perspective view showing the mounting state of the spindle motor on a lifting plate.

Fig.39 is an enlarged schematic perspective view showing a spring member arranged in proximity to a first cam.

Fig.40 is a plan view showing an interengaged state between a shutter opening pin and the disc cartridge in the loading state of the disc cartridge on the cartridge holder.

Fig.41 is a plan view showing the state in which a shutter member starts to be opened by the shutter opening pin in the loading state of the disc cartridge on the cartridge holder.

Fig.42 is a plan view showing the state in which the shutter has been opened by the shutter opening pin in the loading state of the disc cartridge on the cartridge holder.

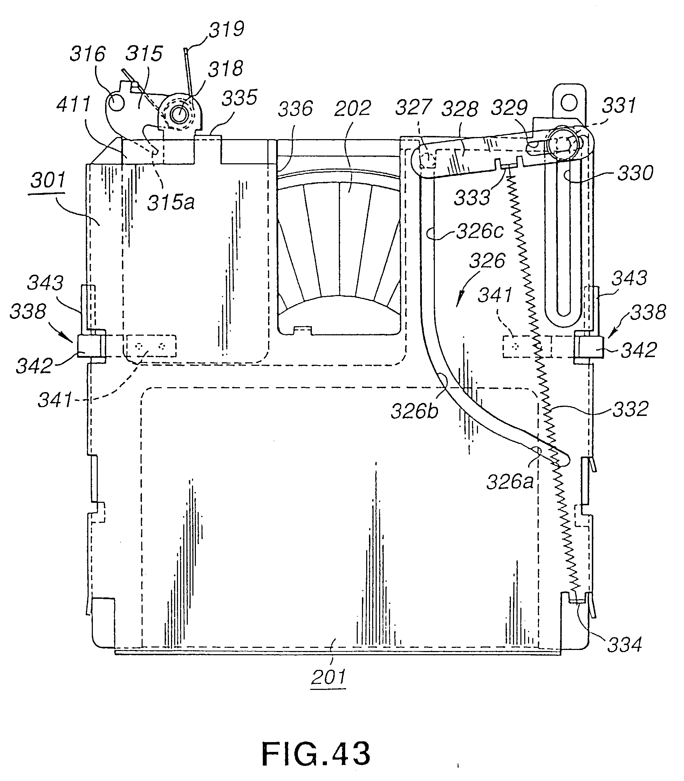

Fig.43 is a plan view showing the state in which the shutter has been opened fully by the shutter opening pin in the loading state of the disc cartridge on the cartridge holder.

Fig.44 is a plan view showing an operating state of the lifting unit in an unloaded state.

Fig.45 is a right-hand side view showing an operating state of the lifting unit in an unloaded state.

Fig.46 is a left-hand side view showing an operating state of the lifting unit in an unloaded state.

Fig.47 is a front view showing an operating state of the lifting unit in an unloaded state.

Fig.48 is a plan view showing an operating state of the lifting unit in the loaded state.

Fig.49 is a right-hand side view showing an operating state of the lifting unit in the loaded state.

Fig.50 is a left-hand side view showing an operating state of the lifting unit in the loaded state.

Fig.51 is a front view showing an operating state of the lifting unit in the loaded state.

### DESCRIPTION OF THE INVENTION

Referring to the drawings, preferred embodiments of the present invention will be explained in detail. In the present embodiment, the invention is applied to a magneto-optical disc device for recording and/or reproducing a magneto-optical disc.

First, a disc cartridge having rotatably contained therein a magneto-optical disc loaded on the magneto-optical disc device is explained.

### [1] Construction of Disc Cartridge

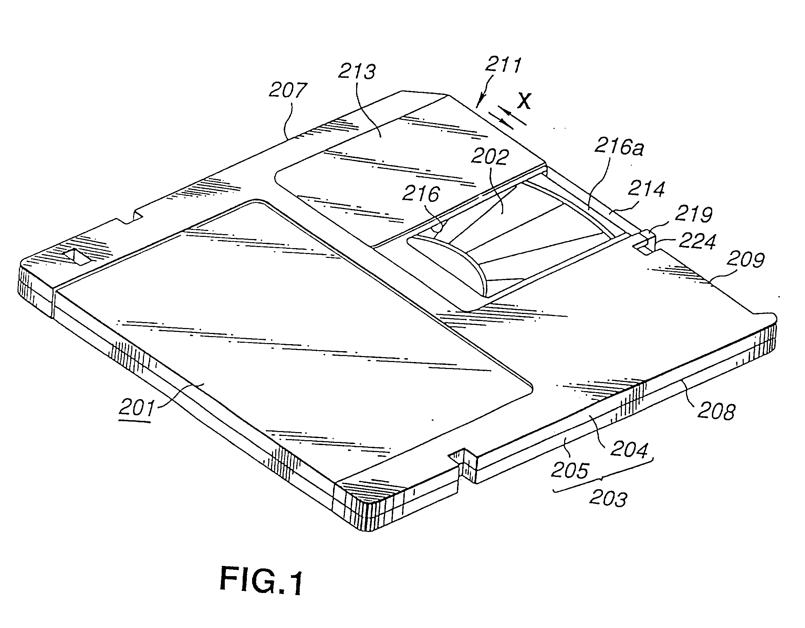

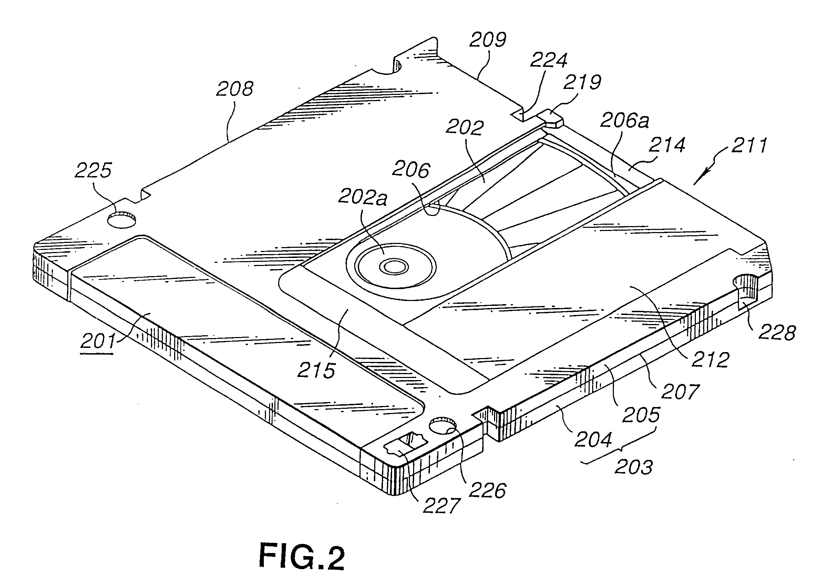

A disc cartridge 201 includes a cartridge main body 203 for rotatably housing therein a magneto-optical disc 202, and a shutter 211, as shown in Figs.1 and 2.

The magneto-optical disc 202 comprises a perpendicular recording layer in its data recording region, and is designed to write and/or read information signals on or from the recording layer by magneto-optical means. This magneto-optical disc 202 has a signal recording surface on its one major surface. A disc-shaped clamping hub 202a of a metallic material is provided at a central region of one of the major surfaces of the magneto-optical disc 202.

The cartridge main body 203 is made up of an upper cartridge half 204 and a lower cartridge half 205, each being rectangular in contour and being dimensioned to accommodate the magneto-optical disc 202 therein. These upper and lower cartridge halves are abutted and connected to each other to constitute the cartridge main body. The magneto-optical disc 202 is rotatably contained within the confines of the cartridge main body 203.

The lower cartridge half 205 is formed with a first aperture 206 for exposing a clamping hub 202a formed at a mid part of the disc 202 to outside and also exposing a part of the signal recording surface of the disc 202 to outside across the inner and outer rims of the disc. The first aperture 206 is formed as an elongated rectangular opening at a mid portion between a lateral side 207 and the opposite lateral side 208 of the cartridge main body 203 for extending from a front side 209 up to the mid region of the cartridge main body 203.

When the disc cartridge 201 is loaded in position on the magneto-optical disc recording and/or reproducing apparatus, the first aperture 206 permits the clamping hub 202a to be exposed to a disc table of a disc rotating and driving device adapted for rotationally driving the magneto-optical disc 202, at the same time that the first aperture 206 permits the signal recording surface of the magneto-optical disc 202 to be exposed to the optical pickup adapted for radiating a laser beam to the signal recording surface of the magneto-optical disc 202.

A second aperture 216 is formed in the upper cartridge half 205 in register with the first aperture 206 formed in the lower half 204. The second aperture 216 is formed towards front side 209 of the cartridge main body 203 as a rectangular opening dimensioned to permit a portion of the opposite major surface of the magneto-optical disc 202 to be exposed to outside in the radial direction of the disc across the inner and outer rims of the disc. When the disc cartridge 201 is loaded in position on the magneto-optical disc device, the second aperture 216 permits the opposite major surface of the magneto-optical disc 202 to be exposed to a magnetic head adapted for impressing an external magnetic field to the magneto-optical disc 202.

Meanwhile, the portions of the front side 206 of the cartridge main body 203 in register with the first aperture and the second aperture 216 are formed with recesses 206a, 216a in order to permit the magnetic head and the optical pickup to be easily intruded into close proximity to the major surfaces of the magneto-optical disc 202. That is, the mid portion of the cartridge main body 203 in the vicinity of the front side 209 is reduced in thickness in the regions thereof facing the first and second apertures 206, 216. In this manner, when the disc cartridge 201 is loaded in position, the cartridge main body 203 may be prevented from being directly contacted with the magnetic head and the optical pickup to permit the magnetic head and the optical pickup to be positioned in proximity to the signal recording surface of the magneto-optical disc 202. Besides, a shutter 211 for opening and closing the first aperture 206 and the second aperture 216 is slidably mounted on the cartridge main body 203. The shutter 211 is made up of a first shutter plate portion 212 for closing the first aperture 206 of the lower cartridge half 205, a second shutter plate portion 213 arranged parallel to the first shutter plate portion 212 for closing the second aperture 216 of the upper cartridge half 204 and a connecting web portion 214 interconnecting the proximal sides of the first and second shutter plate portions 212, 213.

The first shutter plate portion 212 is in the form of an elongated rectangle of a narrow width dimensioned to close the first aperture 206 of the lower cartridge half 205. The distal end of the first shutter plate portion 212 is supported by a shutter retention plate 215 mounted on the outer surface of the lower cartridge half 205 to prevent the first shutter plate portion from becoming floated from the cartridge main body 203. On the other hand, the second shutter plate portion 213 is in the form of a rectangle of a broader width dimensioned to close at least the second aperture 216.

The connecting web portion 214 for interconnecting the shutter plate portions 212, 213 has a thickness substantially equal to the thickness of the central portion of the cartridge main body 203 which is of a reduced thickness in order to permit the magnetic head and the optical pickup to approach the magneto-optical disc 202 when the shutter 211 is slid to an opened state of exposing the magneto-optical disc 202 to outside. The connecting web portion 214 is retained by an end of a torsion coil spring, not shown, having its other end retained within the confines of the cartridge main body 203. The torsion coil spring perpetually thrusts the shutter 211 in a direction of closing the first and second apertures 206, 216. The connecting web portion 214 is adapted for being slid along the front side 209 of the cartridge main body 203 for realizing stable sliding of the shutter 211.

The above-described shutter 211 is adapted for being moved in a direction indicated by arrow X in Fig.1 between a position of closing the first aperture 206 and the second aperture 216 and a position of opening the apertures 206,216. The front side 209 of the cartridge main body 203 is formed with a snap-engaging portion 224 in which a shutter opening pin, not shown, provided on a cartridge holder as later described is engaged when the shutter 211 is moved by the operation of the shutter opening pin. The first and second apertures 206, 216 are opened by the shutter opening pin. The snap-engaging portion 224 is formed as a substantially U-shaped recess at a portion of the front side 209 in register with an end tab 219 of the connecting web portion 214 when the first and second apertures 206, 216 have been opened.

The lower cartridge half 205 is formed with a pair of engaging through-holes 225, 226 adapted for being engaged by cartridge positioning pins adapted in turn for setting the horizontal loading position of the disc cartridge 201 when the disc cartridge 201 is loaded on the magneto-optical disc recording and/or reproducing apparatus. The lower cartridge half 205 is provided with a mistaken erasure inhibiting member 227 in the vicinity of the engaging through-hole 226 for selecting whether or not information signals may be recorded on the magneto-optical disc 202. The lateral side 207 of the cartridge main body 203 is formed towards its front side with a recess 228 adapted for being engaged by a capturing pin provided on a loading unit of the magneto-optical disc recording and/or reproducing apparatus for capturing the disc cartridge 201.

The magneto-optical disc recording and/or reproducing apparatus for recording and/or reproducing information signals on or from the magneto-optical disc 202 contained in the above-described disc cartridge 201 is hereinafter explained.

### [2] Schematic Constitution of Magneto-Optical Disc Recording and/or Reproducing Apparatus

The present magneto-optical disc recording and/or reproducing apparatus comprises a disc loading unit, a disc rotating and driving unit, a cartridge positioning unit, a lifting unit and a head unit. The disc loading unit captures the disc cartridge 201 to a predetermined loading position. The disc rotating and driving unit runs the magneto-optical disc 202 within the disc cartridge 201 into rotation. The cartridge positioning unit positions the disc cartridge 201 held at a predetermined loading position. The cartridge positioning unit and the disc rotating and driving unit is elevated and lowered relative to the disc cartridge 201 by the lifting unit. The head unit is made up of an optical pickup which is moved radially of the magneto-optical disc 202 across its inner and outer rims for recording and/or reproducing information signals on or from the disc 202 and a magnetic head unit for impressing an external magnetic field during recording of information signals on the magneto-optical disc 202.

### [2-a] Disc Rotating and Driving Unit

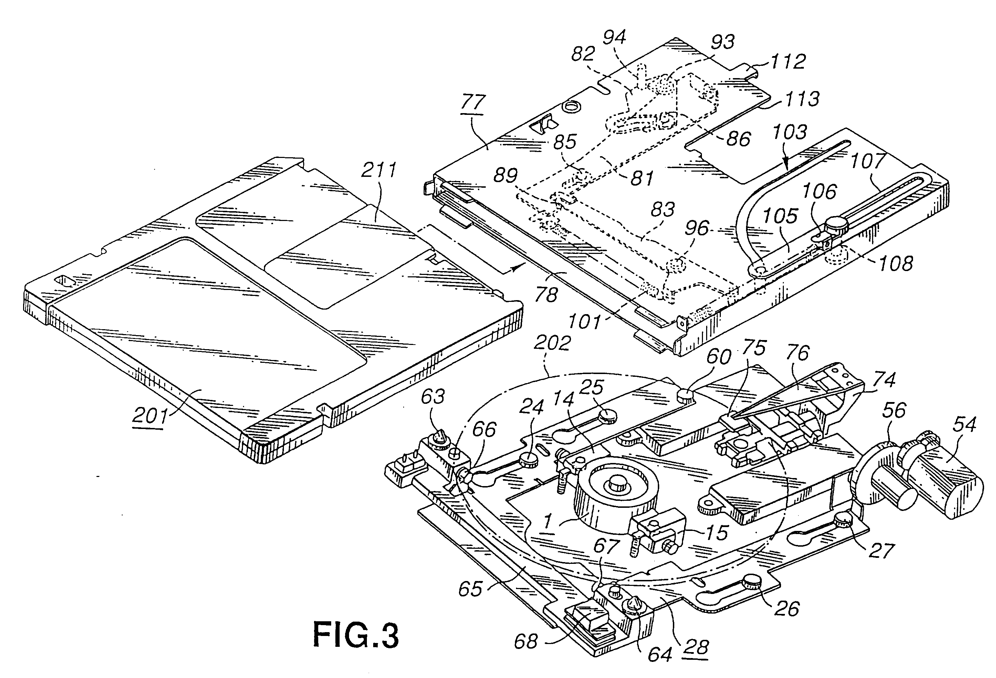

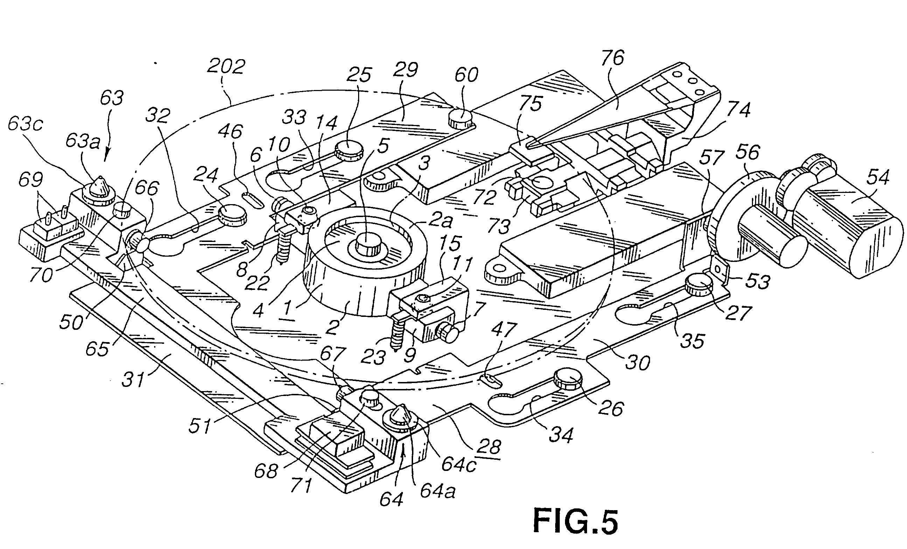

The disc rotating and driving unit includes a spindle motor 1 driven in a lifting direction towards and away from the disc cartridge 201 by lifting means, as shown in Fig.3, as later explained. The spindle motor 1 includes a columnar-shaped spindle supporting member 2, opened at a side facing a chassis, not shown, and a rotating driving motor, not shown, enclosed within the spindle supporting member 2, as shown in Fig.5. The spindle supporting member 2 has an annular planar surface 2a, opposite to its side facing the chassis, as a disc setting surface for setting the magneto-optical disc 202 contained within the disc cartridge 201. A recess 3 for holding the clamping hub 202a of the magneto-optical disc 202 is formed in the spindle supporting member 2 as a circular recess lower in level than the disc setting surface 2a. A magnet 4 for magnetically attracting the clamping hub 202a of the magneto-optical disc 202 is placed within the recess 3. The magnet 4 is formed as a disc dimensioned to be held within recess 3 and has a central through-hole adapted to be passed through by a spindle shaft 5. The spindle shaft 5 of the spindle motor 1 is protruded above the setting surface 2a at the center of the recess 3.

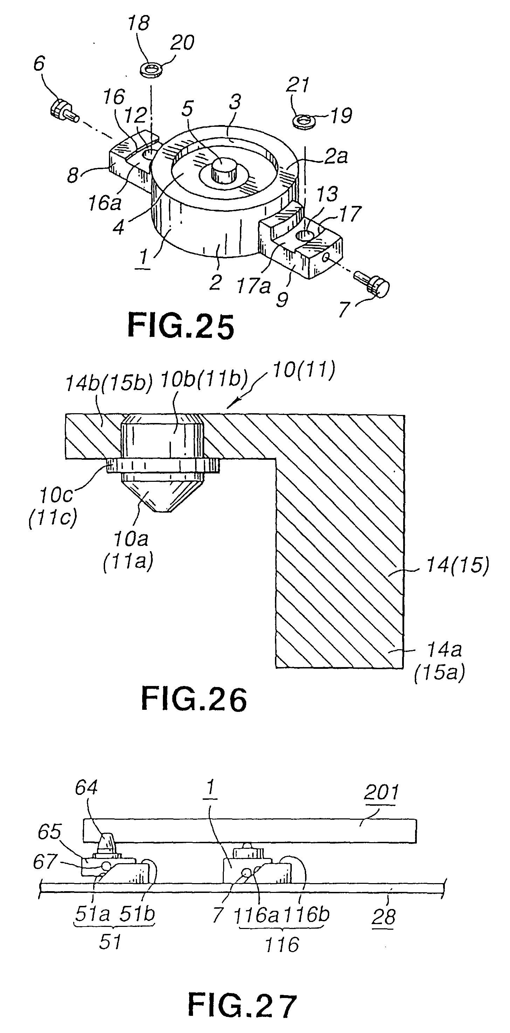

A pair of arm sections 8, 9 are provided at the diametrically opposite positions on the outer periphery of the spindle supporting member 2, as shown in Fig.25. These arm sections 8, 9 are provided with second pins 6, 7, as second lifting means, for vertically moving the spindle motor 1 along with the spindle supporting member 2 towards and away from disc cartridge 201. These arm sections 8, 9 are formed as rectangular plate sections fitted at the diametrically opposite positions on the outer periphery of the spindle supporting member 2. The second pins 6, 7, making up the second lifting means along with a second cam as later described, are rotatably mounted at the distal ends of the arm sections 8, 9, respectively. These second pins 6, 7 are engaged with the second cam for being moved along an inclined surface of the second cam by the movement of the second cam.

The arm sections 8, 9 are formed with engaging through-holes 12, 13 engaged by positioning pins 10, 11 for positioning the spindle motor 1 at a predetermined elevated position. The engaging through-holes 12, 13 are circular through-holes machined highly accurately for finely setting the height position of the spindle motor 1. The arm sections 8, 9 are formed with recesses 16, 17 abutted by positioning pin mounting stationary members 14, 15 mounting the positioning pins 10, 11. These recesses 16, 17 have bottom surfaces 16a, 17a which are machined to smooth planar surfaces in order to be used as reference surfaces for setting the heightwise position of the spindle motor 1. A pair of tension coil springs 22, 23 are retained by the arm sections 8, 9 for maintaining the second cam in contact with the second pins 6 and 7 when the spindle motor 1 is in its raised position. The tension coil springs 22, 23 are retained at one ends by the chassis and at the other ends by one ends of the arm sections 8, 9. Thus the spindle motor 1 is biased at all times towards the chassis under the force of tension coil springs 22, 23.

The spindle motor 1 may be adjusted in tilt at its raised position by spacers 20, 21 on the bottom surfaces 16a, 17a of the recesses 16, 17 playing the part of the reference surface. The spacers 20, 21 are formed with circular recesses 18, 19, respectively, which are larger than the engaging through-holes, and are formed as discs. It becomes possible in this manner to adjust the optical axis of the object lens in a perpendicular direction relative to the signal recording surface of the magneto-optical disc 202 by way of so-called skew adjustment. Usually, for adjusting the optical axis of the object lens, it is necessary to provide the optical pickup with an adjustment mechanism for effecting the adjustment by tilting a driving unit in its entirety. Since the spindle motor 1 is adjusted for tilt by the interposition of spacers 20, 21 in the present embodiment, the optical axis adjustment mechanism for the optical lens, which is bulky and complex in structure, may advantageously be dispensed with.

On the other hand, the mounting members 14, 15, fitted with the positioning pins 10, 11 adapted for controlling the height position of spindle motor 1, are secured to the chassis. The mounting members 14, 15 are formed as blocks, each being substantially L-shaped when seen from lateral side, as shown in Fig.26. The blocks 14, 15 have proximal ends 14a, 15a secured to the chassis, while having distal ends 14b, 15b facing the recesses 16, 17 provided in the arm sections 8, 9. The positioning pins 10, 11, engaged in the engaging through-holes 12, 13, are embedded in distal ends 14b, 15b of the mounting members 14, 15. The positioning pins 10, 11 have distal ends 10a, 11a tapered to permit smooth engagement in the engaging through-holes 12, 13, while having columnar-shaped proximal ends 10b, 11b to permit the ends 10b, 11b to be secured reliably to the mounting members 14, 15. The positioning pins 10, 11 are provided with disc-shaped flanges 10c, 11c between the distal ends 10a, 11a and the proximal ends 10b, 11b for being contacted by the reference surfaces 16a, 17a around the rim of the engaging through-holes 12, 13. These flanges 10c, 11c function as stops for limiting the elevated position of the spindle motor 1.

### [2-b] Construction of Lifting Unit

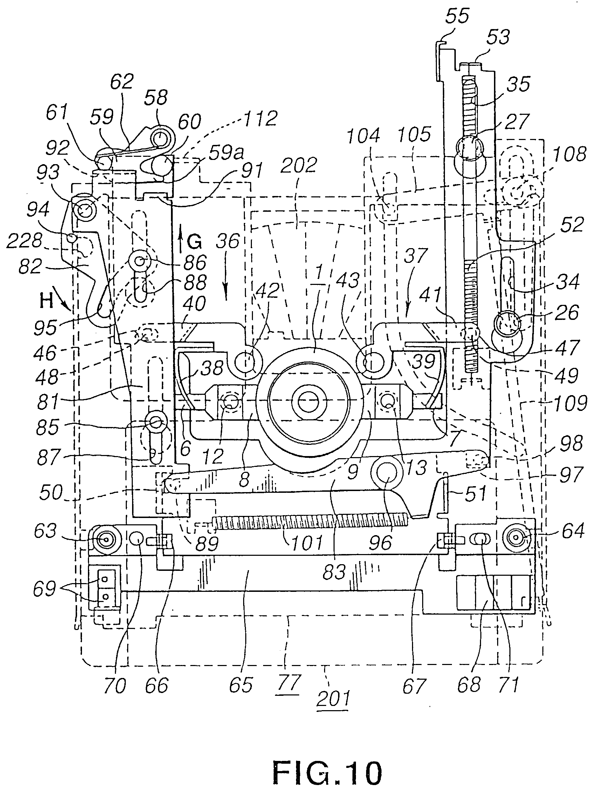

The lifting unit is designed to drive the disc rotating and driving unit and the cartridge positioning unit in a direction towards and away from the disc cartridge 201. The cartridge positioning unit is designed for positioning the disc cartridge 201 maintained at a predetermined loading position by a disc loading unit as later explained. The lifting unit includes a slide member 28 adapted for being moved on the chassis by being guided by guide shafts 24, 25, 26, 27 fixedly mounted at predetermined positions on the chassis, as shown in Fig.5. The slide 28 includes a pair of slide sections 29, 30 extending parallel to each other on both sides of the spindle motor 1 and a connecting web section 31 interconnecting distal ends of the slide sections 29, 30, as shown in Fig.10.

The slide sections 29, 30 are formed with slide through-holes 32, 33, 34, 35 in register with the guide shafts 24 to 27 fixedly mounted on the chassis. These slide sections 29, 30 are provided with second cams 36, 37 engaged by second pins 6, 7 for lifting the spindle motor 1 in directions towards and away rom disc cartridge 201, as shown in Fig.10. These second cams 36, 37 are made up of sector-shaped lifting pieces 36 ,39 engaged with the second pins 6, 7 and retention pieces 40, 41 retained by the slide sections 29, 30, and are mounted for rotation about supporting shafts 42, 43 secured to the chassis.

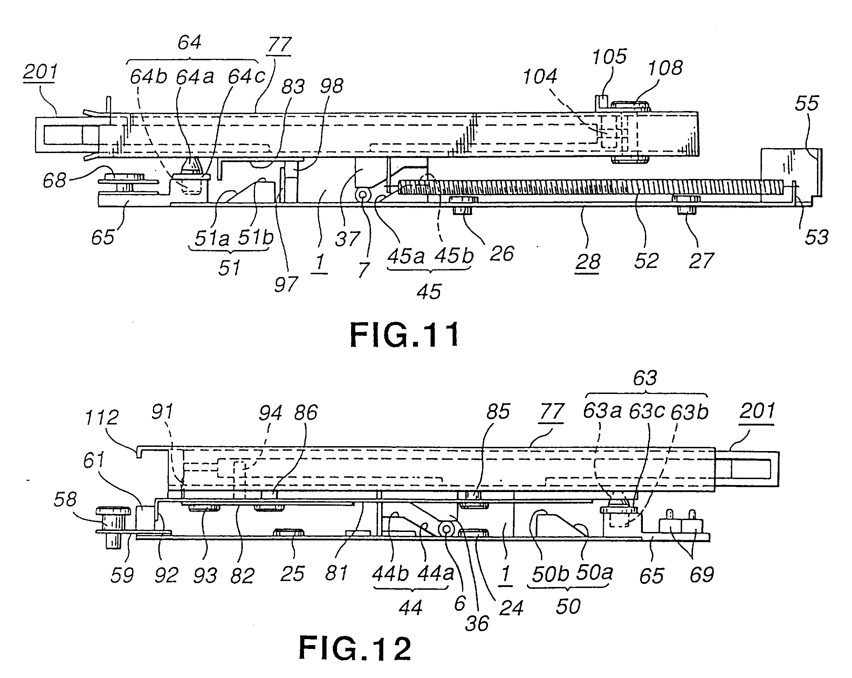

The lifting pieces 38, 39 are formed with cam grooves 44, 45 engaged with the second pins 6, 7, as shown in Figs.11 and 12. The cam grooves 44, 45 are made up of inclined sections 44a, 45a, inclined at predetermined angles relative to the chassis, and parallel sections 44b, 45b extending parallel to the chassis. The inclined sections 44a, 45a play the part of elevating the spindle motor 1, while the parallel sections 44b, 45b play the part of setting the spindle motor 1 to its maximum height position. On the other hand, the retention pieces 40, 41 play the part of connecting means for rotating second cams 36, 37 in synchronism with the movement of the slide 28 and includes engaging pins 48, 49 facing elongated engaging holes 46, 47 formed in the slide sections 29, 30.

The rear edge of the slide section 30 is formed with a spring retainer 53 as shown in Fig.11. A return spring 52 for sliding the slide 28 from an unloading position to a loading position is retained by the spring retainer 53. The rear edge of the slide section 30 is provided with a plate restoration member 55 for forcedly restoring the slide 28 from the loading position to the unloading position against the force of the return spring 52. The restoration member 55 is adapted for being engaged with a columnar-shaped engaging pin 57 provided on a transmission gear 56 for transmitting the rotation of a loading motor 54. As the loading motor 54 is rotated, transmission gear 56 is rotated for engaging an engaging pin 57 mounted upright on the gear 56 with the restoration member 55. As a result thereof, the sliding member 28 is restored from the loading position to the unloading position.

When the slide 28 is brought to the unloading position by the loading motor 54, a trigger arm 59 rotatably mounted about supporting shaft 58 mounted upright on the chassis has its retention pawl 59a engaged with a retention pin 60 mounted at the rear edge of the opposite side slide section 29, as shown in Fig.10. As a result thereof, the slide 28 is maintained in its unloading condition. A torsion coil spring 62 is placed between the supporting shaft 58 and a trigger arm pin 61 mounted upright on the trigger arm 59. The trigger arm 59 is biased in a direction in which the retention pawl 59a is engaged with the retention pin 60.

The connecting web section 31 is provided with first cams 50, 51 constituting a first lifting driving unit for elevating and lowering a positioning unit for positioning the disc cartridge 201 as later described. These cams 50, 51 are made up of inclined sections 50a, 51a, inclined at predetermined angles relative to the chassis, and parallel sections 50b, 51b extending parallel to the chassis, as shown in Figs.11 and 12. The inclined sections 50a, 51a play the part of elevating the spindle motor 1, while the parallel sections 50b, 51b play the part of setting the spindle motor 1 to its maximum height position. The angle of inclination of the first inclined sections 50a, 51a is selected to be larger than that of the inclined sections 44a, 45a of the second cams 36, 37 for elevating the cartridge positioning unit temporally in advance of the disc rotating and driving unit. The cartridge positioning unit, adapted for being elevated and lowered by the first arms 50, 51, are provided with cartridge positioning pins 63, 64 for setting the loading position of the disc cartridge 201 in the horizontal direction by being engaged in pin engaging openings 225, 226 provided in the disc cartridge 201. The positioning pins 63, 64 are embedded in a pin lifting block 65 provided on the chassis so that the pins are in register with pin engaging holes 225, 226. The positioning pins 63, 64 have distal ends 63a, 64a tapered to permit smooth engagement in the pin engaging through-holes 225, 226, while having columnar-shaped proximal ends 63b, 64b to permit the proximal ends 63b, 64b to be secured reliably on the pin lifting block 65. The positioning pins 63, 64 are provided with disc-shaped flanges 63c, 64c between the distal ends 63a, 64a and the proximal ends 63b, 64b for acting as stops by being contacted by the rim of the engaging pin-engaging through-holes 225, 226, as shown in Figs.11 and 12.

The pin lifting block 65, provided with cartridge positioning pins 63, 64, is provided with rotatable first pins 66, 67 adapted for being abutted against the first cams 50, 51 provided on slide 28. The first pins 66, 67 are engaged with the first cams 50, 51 and adapted for being rotated along the inclined sections 50a, 51a of the cams 50, 51 with movement of the cams 50, 51. The pin lifting block 65 is also provided with a temperature sensor 68 and a detection switch 69 for detecting the position of the mistaken erasure inhibiting member 227 provided on the disc cartridge 201. The temperature sensor 68. is provided in proximity to one of the cartridge positioning pins 63, while the detection switch 69 is provided in proximity to the other cartridge positioning pins 64.

### [2-c] Constitution of Optical Pickup and Magnetic head Unit

An optical pickup 73 has an object lens 72 for converging a laser beam and radiating the converged laser beam to the signal recording surface of the magneto-optical disc 202. The optical pickup 73 is provided on a carriage 74 movable radially of the magneto-optical disc 202 for feeding the object lens 72 in the radial direction in a facing relation relative to the signal recording surface of the magneto-optical disc 202, as shown in Fig.5.

The magnetic head unit has a magnetic head provided with a coil adapted for producing a magnetic field of a predetermined intensity and impressing the magnetic field on the signal recording surface of the magneto-optical disc 202, as shown in Fig.5. A magnetic head 75 is mounted at a distal end of a head supporting arm 76 having its proximal end secured to carriage 15 so that the magnetic head faces the object lens 72 with the disc 202 in-between. When the optical pickup 73 is fed in the radial direction of the magneto-optical disc 202, the magnetic head 75 is transported in the radial direction of the magneto-optical disc 202 when maintaining its position of facing the object lens 72.

### [2-d] Construction of Disc Loading Unit

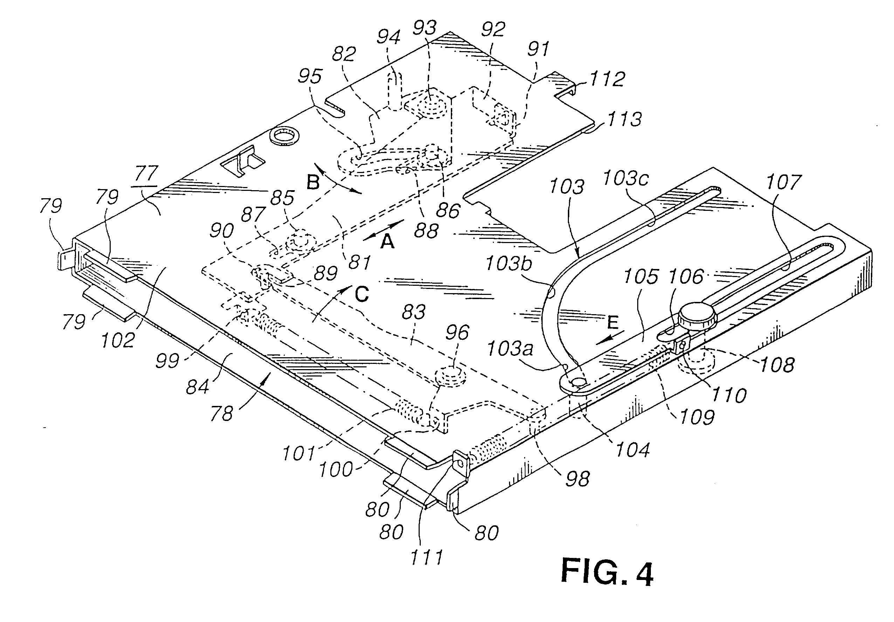

The disc loading unit includes a cartridge holder 77 provided with an automatic injection mechanism of automatically capturing the disc cartridge 201 to its predetermined loading position, as shown in Fig.4. The cartridge holder 77 is designed as a planar rectangular casing having an insertion/ejection opening 78 which is designed as a through-opening extending through the entire length of the cartridge main body. A plurality of guide lugs 79, 80 are formed in the corner regions for assuring facilitated insertion of the disc cartridge 201 into the cartridge holder 77. The automatic injection mechanism provided on the cartridge holder 77 includes a first injection plate 81, a second injection plate 82 and a third injection plate 83. The first injection plate 81 is slidbly mounted in the direction of injection/ejection of the disc cartridge 201. The second injection plate 82 is fitted into a cartridge capturing pin engaging opening 228 formed in the disc cartridge 201 for capturing the disc cartridge 201. The third injection plate 83 causes the first injection plate 81 to be forcedly slid along the depthwise direction of the cartridge holder 77.

The first injection plate 81 is mounted on a lower plate section 84 of the cartridge holder 77 for facing the slide section 29 provided with the retention pin 60. The first injection plate 81 is adapted for being reciprocated as indicated by arrow A in Fig.4 in the inserting direction of the disc cartridge 201 relative to the cartridge holder 77 by being engaged with a pair of guide shafts 85, 86 mounted upright on the lower plate section 84 of the cartridge holder 77. The first injection plate 81 is formed with elongated guide grooves 87, 88 in register with the guide shafts 85, 86 and for extending in the inserting direction of the disc cartridge 201. The guide shafts 85, 86 are engaged in the guide grooves 87, 88 to permit reciprocation of the first injection plate 81.

The first injection plate 81 is formed with a cutout 90 adapted for being engaged by an operating pin 89 provided on the third injection plate 83. The cutout 90 is formed at a foremost part of the first injection plate towards the insertion/ejection opening 78 as a substantially U-shaped recess opened at one end and dimensioned to be faced by the operating pin 89. A contact portion 91 is provided in the depthwise direction of the first injection plate 81 so as to be abutted by a shutter 211 of the disc cartridge 201 introduced into the cartridge holder 77. The contact portion 91 is a plate-shaped section segmented from the lower plate section 84 of the cartridge holder 77 in a manner not shown in detail. A rotating member 92 adapted for being contacted with the trigger arm pin 61 is provided at the rear edge in the depthwise direction of the first injection plate 81.

The second injection plate 82 is mounted for rotation relative to a rotary shaft 93 mounted upright on the rear portion of the first injection plate 81 as shown by arrow B in Fig.5. A cartridge capturing pin 94 adapted for being engaged in pin engaging opening 228 in the disc cartridge 201 inserted into the cartridge holder 77 via the insertion/ejection opening 78 is mounted upright on the second injection plate 82. Before the disc cartridge 201 is inserted into the cartridge holder 77, the capturing pin 94 is positioned outside the cartridge holder 77. As the disc cartridge 201 is inserted into the cartridge holder 77 until the pin-engaging opening 228 is in register with the capturing pin 94, the second injection plate 82 is rotated for intruding the capturing pin 94 mounted upright on the injection plate 82 into the pin engaging opening 228.

The second injection plate 82 is formed with a cam groove 95. By the operation of the cam groove 95, the capturing pin 94 is positioned outside of the cartridge holder 77 in the unloading condition and, when the disc cartridge 201 is inserted into the cartridge holder 77 until the pin engaging opening 228 formed in the disc cartridge 201 is in register with the capturing pin 94, the second injection plate 82 is rotated for intruding the capturing pin 94 into the pin engaging opening 228. The cam groove 95 is adapted for being engaged by guide shaft 86 mounted upright on the cartridge holder 77 via guide groove 88 provided at back of the first injection plate 81.

The third injection plate 83 is adapted for forcibly sliding the first injection plate 81 in the depthwise direction of the cartridge holder 77. The third injection plate 83 is rotatable in the direction substantially at right angles to the inserting direction of the disc cartridge 201 about a pivot 96 on the lower plate section 84 of the cartridge holder 77. The operating pin 89 engaged with the cutout 90 formed in the first injection plate 81 is mounted upright on one edge portion of the third injection plate 83. The opposite edge portion of the third injection plate 83 is provided with a holding pin 98 adapted for being contacted with a holding lug 97 formed by segmenting and folding a distal end position of the sliding section 30 of the slide 28 towards cartridge holder 77. The third injection plate 83 is perpetually biased to be turned in the direction of arrow C in Fig.4 by a tension coil spring 101 placed between a spring retainer 99 formed by segmenting a part of the cartridge holder 77 and a second spring retainer 100 formed in the third injection plate 83.

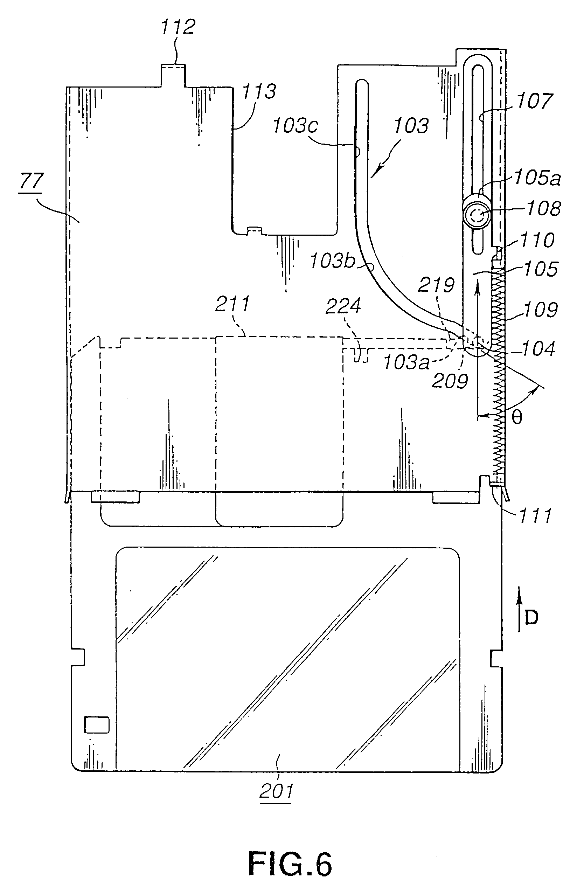

The cartridge holder 77 is provided with a shutter opening mechanism for automatically opening the shutter 211 of the disc cartridge 201 introduced via insertion/ejection opening 78 into the interior of cartridge holder 77. The shutter opening mechanism mainly is comprised of a cam groove 103 and a supporting member 105. The cam grove 103 is formed in the upper plate section 102 of the cartridge holder 77. The supporting member 105 is provided with a shutter opening pin 104 acting as a shutter opening member movable along the cam groove 103. The profile of the cam groove 103 is selected to describe a locus of opening the shutter 211 of the disc cartridge 201 introduced into the cartridge holder 77 in operative association with the inserting operation of the disc cartridge 201. The cam groove 103 is made up of an inclined inchoate section 103a inclined relative to the inserting direction of the disc cartridge 201 shown by arrow D in Fig.6, an arcuate section 103b contiguous to the inclined section 103a and a rectilinear section 103c contiguous to the arcuate section 103b and extending substantially parallel to the inserting direction of the disc cartridge 201, as shown in Fig.6.

The inclined section 103a of the cam groove 103 plays the role of generating a component force for opening the shutter 211 of the disc cartridge 201 introduced via opening 78 into the inside of the cartridge holder. The inclined section 103a has an angle of inclination θ relative to the inserting direction of the disc cartridge 201 of at least 25' for generating the component force of causing the rotation of the shutter opening pin 104 as a result of the insertion of the disc cartridge 201.

The arcuate section 103b, contiguous to the arcuate section 103a, plays the part of decreasing the length of the locus of movement of the shutter opening pin supporting member 105. If the arcuate section 103b is rectilinear, the locus of movement of the supporting member 105 is increased so that a rear end 105a of the supporting member 105 is rotated outwardly of cartridge holder 77. The result is that the rear end 105a tends to be contacted with exterior portions provided outside of the cartridge holder 77. By having the arcuate cam groove 103 as in the present embodiment, the locus of movement of the supporting member 105 is decreased to shorten the locus of movement of the supporting member 105 to reduce the extension of the rear end 105a of the supporting member 105 to as small a value as possible. In this manner, it becomes possible to provide exterior components outside of cartridge holder 77 in proximity to cartridge holder 77 to render it possible to reduce the size of the magneto-optical disc recording and/or reproducing apparatus.

The rectilinear section 103c, contiguous to the arcuate section 103b, plays the part of shifting the disc cartridge 201 towards he rear end of the cartridge holder 77 in the fully opened state of the shutter 211. By shifting the disc cartridge 201 towards the rear end of cartridge holder 77, with the shutter 211 being opened, it becomes possible to avoid possible contact of the magnetic head 75 and the optical pickup 73 with the disc cartridge 201 and to eliminate a mechanism of elevating and lowering the magnetic head 75.

The supporting member 105 is formed as a substantially rectangular plate-shaped member having rounded foremost and rear ends 105b, 105a. The shutter opening pin 104 facing he cam groove 103 is formed upright on the foremost end 105b. The shutter opening pin 104 is columnar-shaped and depends into the inside of the cartridge holder 77 via cam groove 103. The pin supporting member 105 is also formed with an elongated slide opening 106 extending from its rear end 105a to its mid portion. The slide opening 106 is engaged by a movable guide pin 108, as a mating engaging portion, which is movable along a guide section 107 formed in the cartridge holder 77. The guide section 107 is an elongated groove extending parallel to the rectilinear section 103c of the cam groove 103 so as to be engaged by the movable guide pin 108. The movable guide pin 108 is a columnar-shaped main portion dimensioned to be movable along the guide section 107 and disc-shaped flanges at the upper and lower ends of the main portion.

The above-described shutter opening pin supporting member 105 is perpetually biased by the tension coil spring 109 in a direction in which the shutter opening pin 104 is positioned at the inchoate end of the cam groove 103 as indicated by arrow E in Fig.4. The tension coli spring 109 has its one end retained by a spring retainer 110 provided on the supporting member 105, while having its other end retained by a spring retainer 111 formed by segmenting the upper plate section 102 of the cartridge holder 77. As a result thereof, the coil spring 109 causes the shutter opening pin 104 to be positioned at the inchoate position of the cam groove 103, that is at the initial position of the inclined section 103a.

The upper plate section 102 of the cartridge holder 77 is formed with a position controlling member 112 for position-controlling the disc cartridge 201 inserted into the cartridge holder 77 so that the disc cartridge will not be intruded beyond the loading position which is the predetermined loading position. The controlling member 112 is provided for being protruded beyond the rear edge of the upper plate section 102 and has its foremost part bent so as to depend in the inside of cartridge holder 77. The cartridge holder 77 is formed with a cutout faced by the magnetic head 75 and the optical pickup 73.

### [3] Explanation of the Disc Cartridge Loading Operation

The operation of loading the above-described disc cartridge onto the magneto-optical disc recording and/or reproducing apparatus is hereinafter explained.

The disc cartridge 201 is first introduced in a regular direction into the inside of the cartridge holder 77 via its cartridge insertion/ejecting opening 78. The shutter opening pin 104, maintained at its initial position, is caused to bear against the front side 209 of the disc cartridge 201, as shown in Fig.6.

As the disc cartridge 201 is further introduced from this condition into the inside of the cartridge holder 77, a component of force is induced in the shutter opening pin 104 which is thrust by the disc cartridge 201. As a result thereof, the shutter opening pin 104 is moved along the inclined section 103a of the cam grove 103.

As the disc cartridge 201 is thrust towards the inside of the cartridge holder 77, the supporting member 105 is rotated about guide pin 108 mounted at the initial position at one end of the guide section 107 provided on the cartridge holder 77 against the bias of the tension coil spring 109 installed between the supporting member 105 and the cartridge holder 77. As a result thereof, the shutter opening pin 104, mounted at the foremost part 105b of the supporting member 105, is moved along the rectilinear section 103a of the cam groove 103.

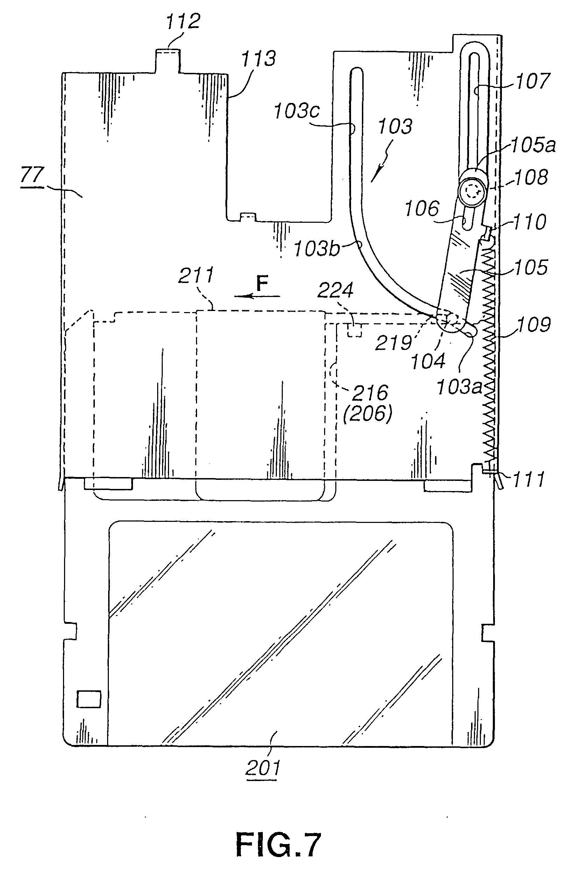

Thus the shutter 211 is moved in a direction of opening the apertures 206, 216 in the disc cartridge 201, against the bias of torsion coil spring enclosed within the cartridge main body 203, as indicated by arrow F in Fig.7.

As the disc cartridge 201 is intruded further into the inside of cartridge holder 77, shutter opening pin 104 is moved along the arcuate section 103b of cam groove 103 for shifting the shutter 211 further. When the shutter opening pin 104 is moved along the arcuate section 103b, the supporting member 105 is rotated about the guide pin 108 which is disposed at the same initial position as that when the shutter opening pin 104 has been moved along the inclined section 103a. That is, as long as shutter opening pin 104 is moved from the inclined section 103a up to the arcuate section 103b, the guide pin 108 is at the initial position, because the slide groove 106 is formed in the supporting member 105. As a result thereof, the locus of movement of the supporting member 105 is extremely small throughout the inclined section 103a and the arcuate section 103b so that the rear end 105a is scarcely protruded outwardly of the disc cartridge 201.

When the shutter opening pin 104 reaches the rear end of the arcuate section 103b, the shutter opening pin 104 is intruded into the snap-engaging section 224 formed in the cartridge main body 203.

This causes the apertures 206, 216 of the disc cartridge 201 to be opened fully to expose he magneto-optical disc 202 contained in the cartridge main body 203.

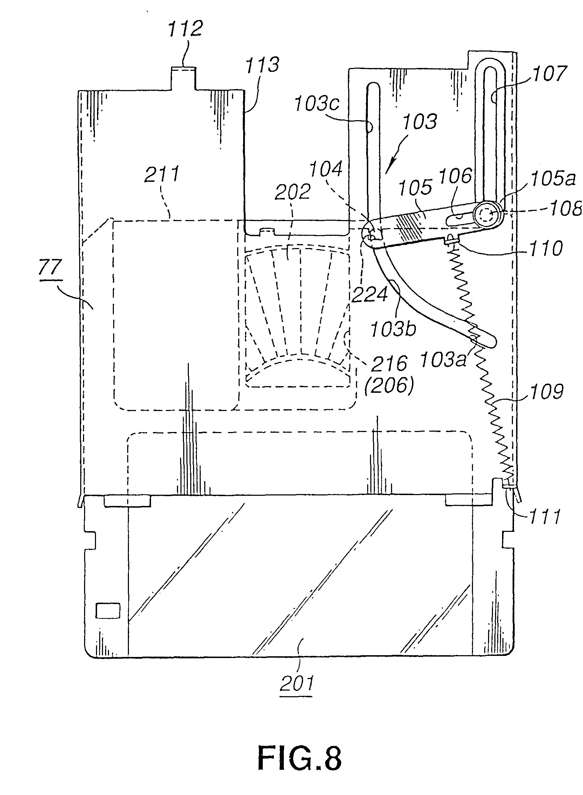

When the disc cartridge 201 is intruded inwardly of the cartridge holder 77, guide pin 108 is caused to bear against the front side 209 of the cartridge main body 203. As the disc cartridge 201 is moved further inwardly into the inside of cartridge holder 77, the supporting member 105 is moved along the guide section 107, while maintaining the condition shown in Fig.8.

The disc cartridge 201 is caused to bear against the contact portion 91 of the first injection plate slidably mounted on the cartridge holder 77, as shown in Figs.10 to 12.

When the disc cartridge 201 is inserted further inwardly from this condition, the first injection plate 81 is slid, along with the disc cartridge 201, along guide shafts 85, 86 secured to cartridge holder 77, in the inserting direction of the disc cartridge 201, as indicated by arrow G in Fig.10.

With the sliding movement of the first injection plate 81, the second injection plate 82 is moved in the inserting direction of the disc cartridge 201, along with the first injection plate 81, at the same time that the second injection plate 82 is rotated along cam groove 95 formed in the second injection plate 82 as indicated by arrow H in Fig.10.

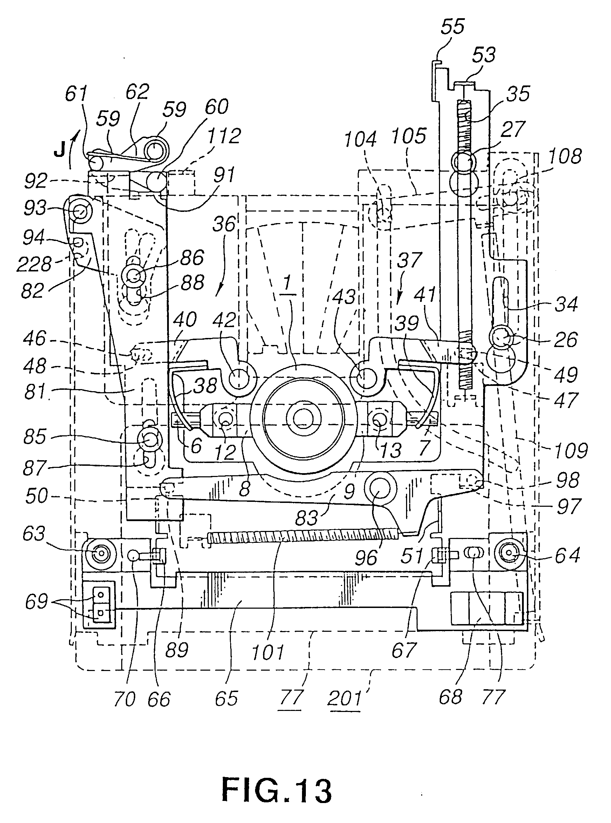

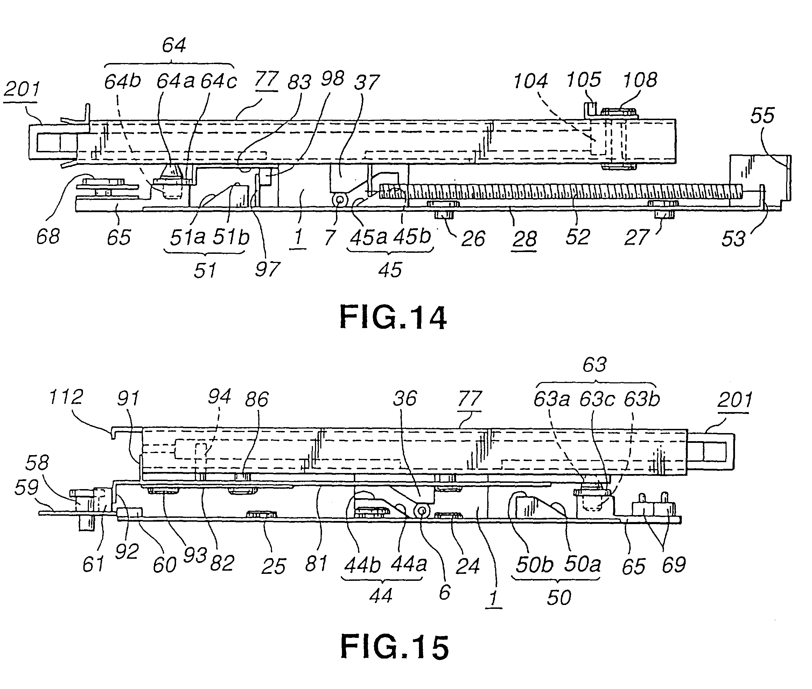

As a result thereof, capturing pin 94 provided on the second injection plate 82 is intruded into the pin engaging opening 228 formed in disc cartridge 201, as shown in Figs.13 to 15.

When the disc cartridge 201 is moved further inwardly into the cartridge holder 77, the operating piece 92 provided at the rear edge of the first injection plate 81 is contacted with trigger arm pin 61 of the trigger arm 59 rotatably mounted on the chassis.

As the first injection plate 81 is moved further towards rear, the trigger arm 59 is rotated about the pivot 58 as the center of rotation, as indicated by arrow J in Fig.13, for releasing engagement with the retention pin 60 secured to the slide 28.

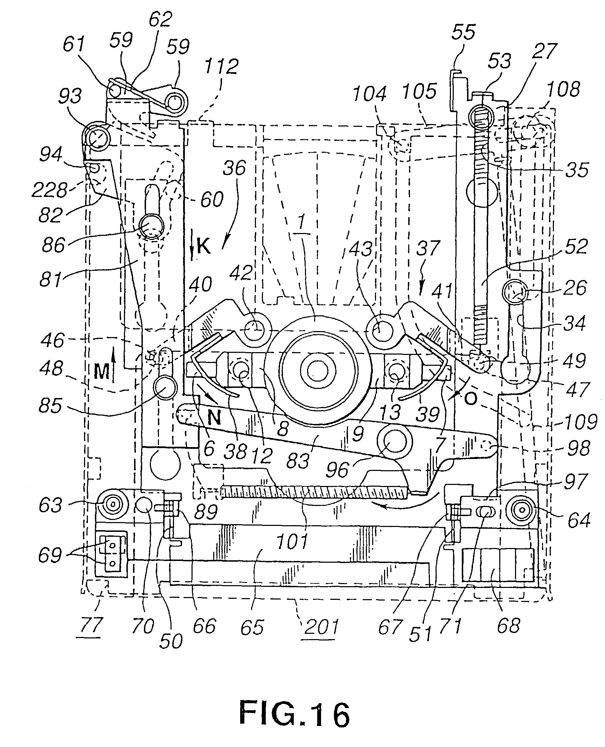

As a result thereof, the slide 28 starts to be slid on the chassis towards the inserting/ejection opening 78, as indicated by arrow K in Fig.16, as the slide 28 is guided along guide shafts 24 to 27 secured to the chassis, by the operation of the return spring 52 mounted between the slide 28 and the cartridge holder 77.

This releases the engagement between the holding lug 97 provided on the slide 28 and the holding pin 98 of the third injection plate 83. The third injection plate 83 is now forcibly rotated, under the action of the tension coil spring 101 installed between the third injection plate and the cartridge holder 77, in a direction shown by arrow L in Fig.16, about the pivot 96 as the center of rotation. When the third injection plate 83 is rotated, the actuating pin 89, mounted upright on the fist injection plate 81, is slid in the inserting direction of the disc cartridge 201, as indicated by arrow M in Fig.16.

Since the capturing pin 94 of the second injection plate 82 is already intruded at this time into the pin engaging opening 228 in the disc cartridge 201, disc cartridge 201 is automatically captured in the depthwise direction of cartridge holder 77, until ultimately the shutter 211 of the disc cartridge 201 is caused to bear against the position controlling member 112 provided in the cartridge holder 77 for setting the loading position of the disc cartridge 201.

As the slide 28 is slid towards the inserting/ejection opening 78, second cams 36, 37 are rotated in the directions indicated by arrows N and O in Fig.16 about the supporting shafts 42, 43 as the centers of rotation. Simultaneously, the first cams 50, 51, provided on the slide sections 29, 30, are shifted towards the cartridge insertion/ejection opening 78. Engaging pins 48, 49 facing engaging openings formed in the slide sections 29, 30 of the slide 28 are provided at one ends of the second cams 36, 37, respectively.

As the slide 28 is slid further towards the insertion/ejection opening 78, the second cams 36, 37 are caused to bear against second pins 6, 7 provided on the spindle supporting member 2, at the same time that the first cams 50, 51 are caused to bear against the first pins 66, 67 provided on the cartridge positioning pin lifting block 65. With the movement of slide 28, the second pins 6, 7 are raised on the inclined sections 44a, 45a of second cams 36, 37, while the pins are rotated about their own axes, at the same time that the first pins 66, 67 are raised on the inclined sections 50a, 51a of the first cams 50, 51, while the pins 66, 67 are also rotated about their own axes.

Since the angle of inclination of the inclined sections 50a, 51a of the first cams 50, 51 is selected to be larger than that of the inclined sections 44a, 45a of the second cams 36, 37, the first pins 66, 67 reach the parallel sections 50b, 51b of the first cams 50, 51 at an earlier time than the second pins 6, 7.

Since the lifting block 65 is raised in this manner at an earlier time than spindle motor 1, the positioning pins 63, 64 provided on the lifting block 65 are engaged in the engaging openings 225, 226 in the disc cartridge 201. The disc cartridge 201 is loaded in position by the positioning pins 63, 64 of the lifting block 65 engaging with the openings 225, 226.

The second pins 6, 7 then arrive at the parallel sections 44b, 45b of the second cams 36, 37, while the spindle motor 1 is raised in its position until its spindle shaft 5 is intruded into the clamping hub 202a of the magneto-optical disc 202 contained in the disc cartridge 201.

For ejection, the loading motor 54 is run into rotation so that the engaging pin 57 mounted upright on the transmission gear 56 transmitting rotation of the loading motor 54 is engaged with the restoration member 57 provided on the slide 28 for restoring the slide 28 from its loading position to its unloading position against the bias of the slide plate return spring 52.

As a result thereof, an operation which is the reverse of the above-described loading operation is produced, in such a manner that the spindle motor 1 is caused to descend temporally in advance of the lifting block 65, while the third injection plate 83 is rotated by the sliding movement of the slide 28. The first injection plate 81, connected to the third injection plate 83, is forcedly slid to its unloading state, until ultimately the disc cartridge 201 is forcedly discharged out of the cartridge holder 77.

### [4] Other Embodiment 1

### [4-a] Modification 1 of Second Cam

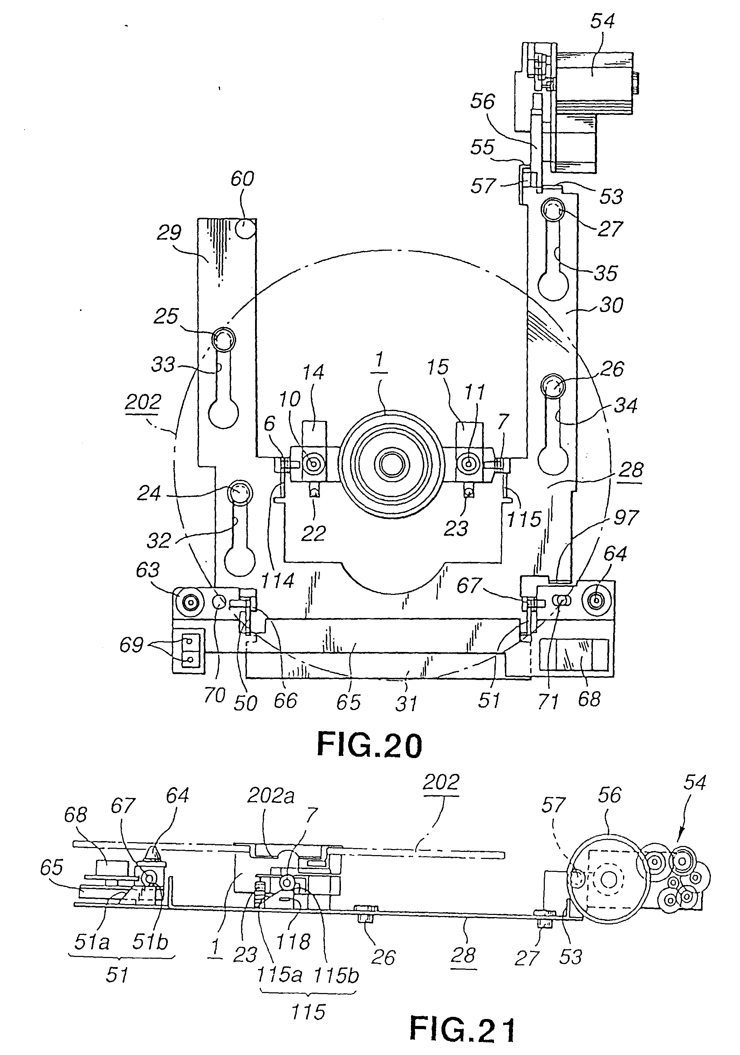

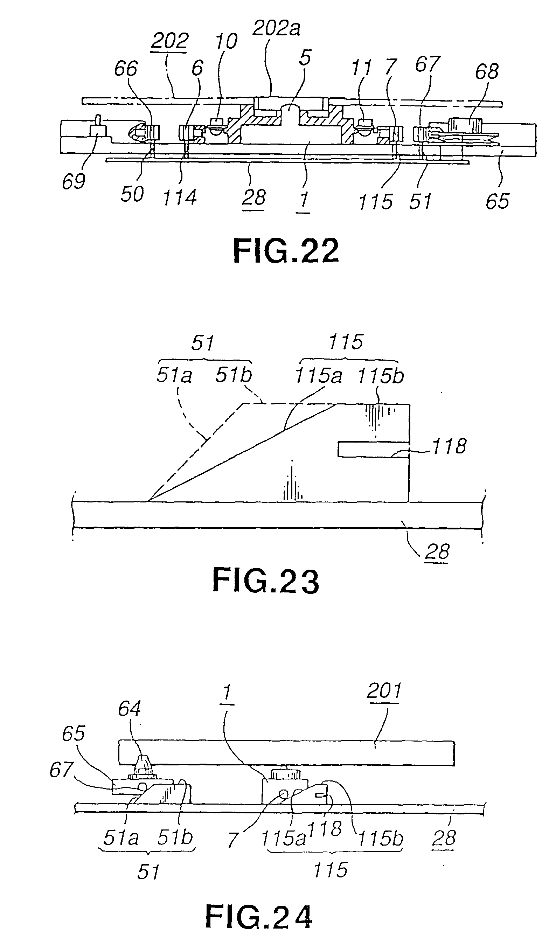

As the second cams for elevating and lowering the spindle motor 1, those cams arranged and constructed similarly to the first cams 50, 51, elevating and lowering the lifting block 65, as shown in Figs.21 to 26, may also be employed, besides the second cams mentioned above. Only one 115 of these cams 114, 115 is shown because these cams are of the same construction. The second cam 115, shown in Fig.23, has an inclined section 115a inclined relative to chassis, and a parallel section 115b, parallel to chassis, and is formed integrally with the slide 28 facing the second pins 6, 7. The angle of inclination of the inclined section 115a of the second cam 115 is selected to be smaller tan that of the inclined section 51a of the first cam 51 for causing the lifting block 65 to be elevated temporally in advance of spindle motor 1.

The result is that, when the slide 28 is slid towards the insertion/ejection opening 78, the first pin 67 climbs up the inclined section 115a temporally in advance of the second pin 7, so that the lifting block 65 is raised temporally in advance of the spindle motor 1. Consequently, the spindle motor 1 has its spindle shaft 5 intruded more easily into the clamping hub 202a of the magneto-optical disc 202, as in the first embodiment, for assuring positive clamping.

In addition, the second cams 114, 115 may also be formed with a slit 118 shown for the cam 115 in Fig.23 for affording elasticity to the parallel section 115b for thrusting the spindle supporting member 2 against the positioning pins 10, 11 under such elasticity. In this manner, the bottom surfaces 16a, 17a of the recesses 16, 17 of the arms 8, 9 on the spindle supporting member 2, operating as the reference surfaces controlling the heightwise position of the spindle motor 1, are caused to be thrust against the positioning pins 10, 11, embedded in the mounting members 14, 15 secured to the chassis, for securing the spindle motor 1, as shown in Fig.21. As a result thereof, the spindle motor 1 is secured positively at a predetermined heightwise position to permit information signals to be recorded on and reproduced from the magneto-optical disc 202 which is run into rotation by the spindle motor 1. Besides, by providing the slits 118 in the second cams 114, 115, it becomes unnecessary to provide an area by which the spindle motor 1 is thrust against the positioning pins 10, 11. Meanwhile, if the cam 115 is formed of a spring material exhibiting sufficient resiliency, a larger force of elasticity may be developed to assure more reliable affixture of the spindle motor 1.

### [4-b] Modification 2 of Second Cam

As the second cam 116, such cam shown in Fig.27, having the same contour as that of the first cams 50, 51 may be employed. If the second cam 116 is of the same contour as the first cams 50, 51, it is necessary that the first and second pins 67, 7 be contacted with the first and second cams 51, 116, at different timings, in order for the elevating block 65 to be lifted temporally in advance of the spindle motor 1. For example, the second cam 116 is adapted for not being contacted with the second pin 7 until after the first pin 67 is contacted with the first cam 51 and the first pin 67 climbs halfway up the inclined section 51a of the first cam 51. In such case, the spindle motor 1 is elevated only after the lifting block 65 is elevated to permit accurate clamping.

### [4-c] Modification 3 of Second Cam

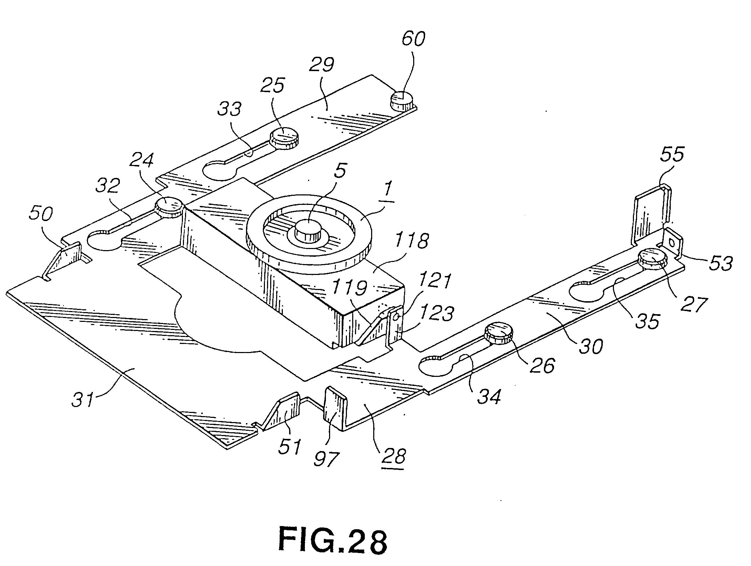

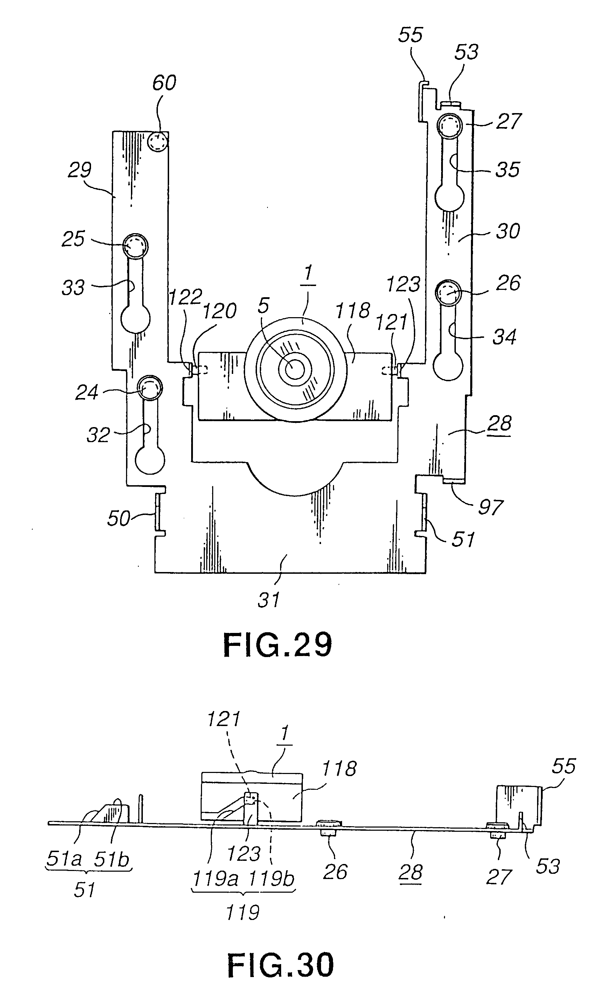

Alternatively, the second cam may be formed with the spindle supporting member 118 supporting the spindle motor 1, as shown in Figs.28 to 30. That is, the spindle supporting member 118 supporting the spindle motor 1 is rectangular in shape and an inclined section 119a inclined relative to the chassis and a parallel section 119b are formed on its lateral side. The angle of inclination of the inclined section 119a is selected to be smaller than that of the inclined sections 50a, 51a of the first cams 50, 51 in order for the lifting block 65 to be elevated temporally in advance of the spindle motor 1. The second pins 120, 121 engaged in the cam grove 119 are provided on supporting pieces 120, 121 mounted upright on the slide 28.

With the above construction, similarly to the previous embodiment, the cartridge positioning pin lifting block 65 may be elevated temporally in advance of the elevation of the spindle motor 1, by virtue of pin-cam engagement, with the result that positive clamping of the magneto-optical disc 202 may be assured.

### [5] Second Embodiment

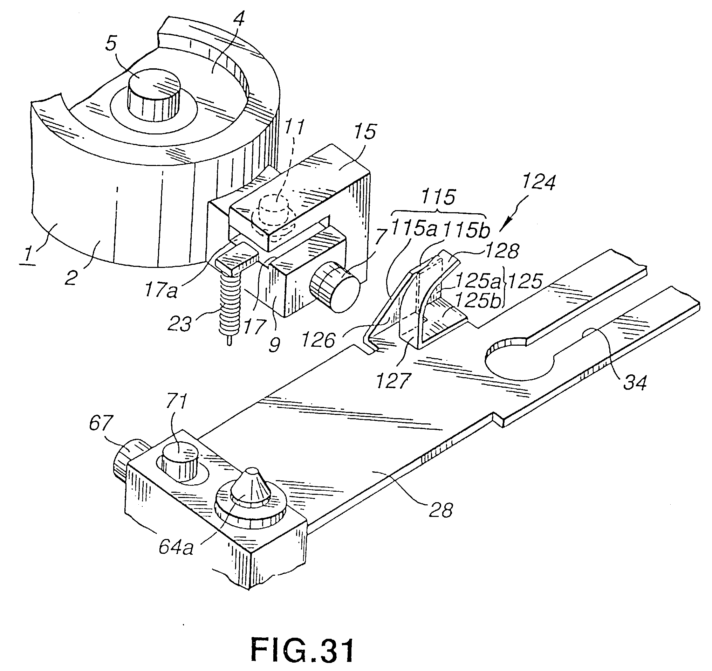

With the present second embodiment, the second cams 114, 115, shown in Fig.21, are each provided with a spring member 124, shown in Fig.31, for positively positioning the spindle motor 1 at its elevated position. Meanwhile, the spring members 124, provided on the left-hand and right-hand sides, are of the same construction, so that only one of them is shown in the drawing.

The spring member 124 is formed by bending a thin metal plate of spring material. The spring member 124 has a substantially L-shaped mounting section 125 made up of an upstanding portion 125a and a proximal portion 125b, and is secured to the second cam 115 by riveting its upstanding portion 125a to the sidewall section of the second cam 125. The foremost part of the proximal portion 125b is formed with an upright portion 127 and a curved portion 128 integrally extending form the foremost part of the upright portion 127 for describing a moderate curve towards the parallel section 115b of the second cam 115.

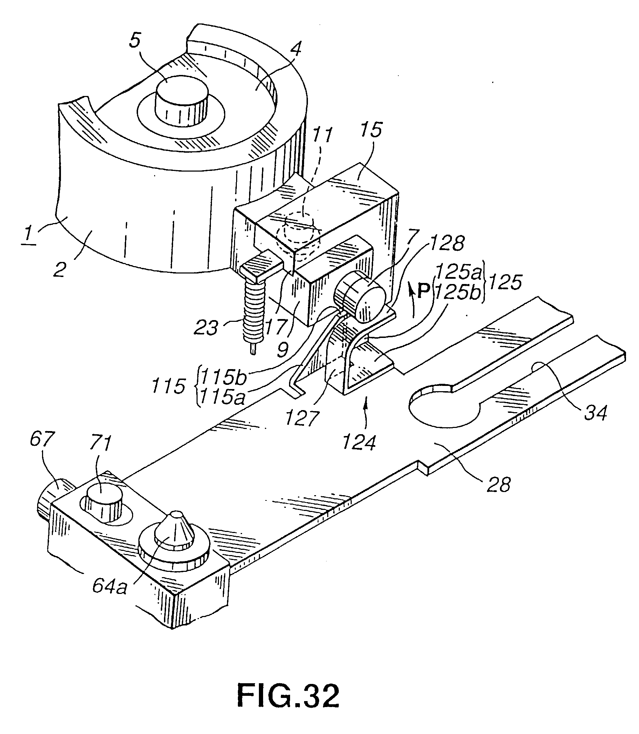

In the unloading condition, the curved portion 128 is adapted for being contacted initially by the second pin 7 only when the second pin 7 climbs up the inclined section 115a to reach the parallel section 115b. Besides, the curved portion 128 has its tip end slightly protruded beyond the parallel section 115b. Therefore, when the second pin 7 reaches the parallel section 115b to roll thereon, the second pin 7 is contacted with the curved portion 128 to flex the portion 128 in the direction of diminishing its curvature, as shown in Fig.32. Under the elastic pressure of the curved portion 128 in the direction indicated by arrow P in Fig.32, the bottom surface 17a of the recess 17 formed in the arm 9 supporting the second pin 7 is thrust against the positioning pin mounting member 15. As a result thereof, spindle motor 1 is accurately positioned at its elevated position and stably maintained in this condition.

Meanwhile, the spring member 124 may be provided not only on the second cams 114, 115, but also on the first cams 50, 51. By providing the spring member 124 on each of the first cams 50, 51, the disc cartridge 201 may be reliably positioned at the elevated position by the positioning pins 63, 64 provided on the lifting block 65.

### [6] Third Embodiment

The magneto-optical disc recording and/or reproducing apparatus for recording and/or reproducing information signals on or from the magneto-optical disc 202 contained in the above-described disc cartridge 201 according to the third embodiment of the present invention is hereinafter explained.

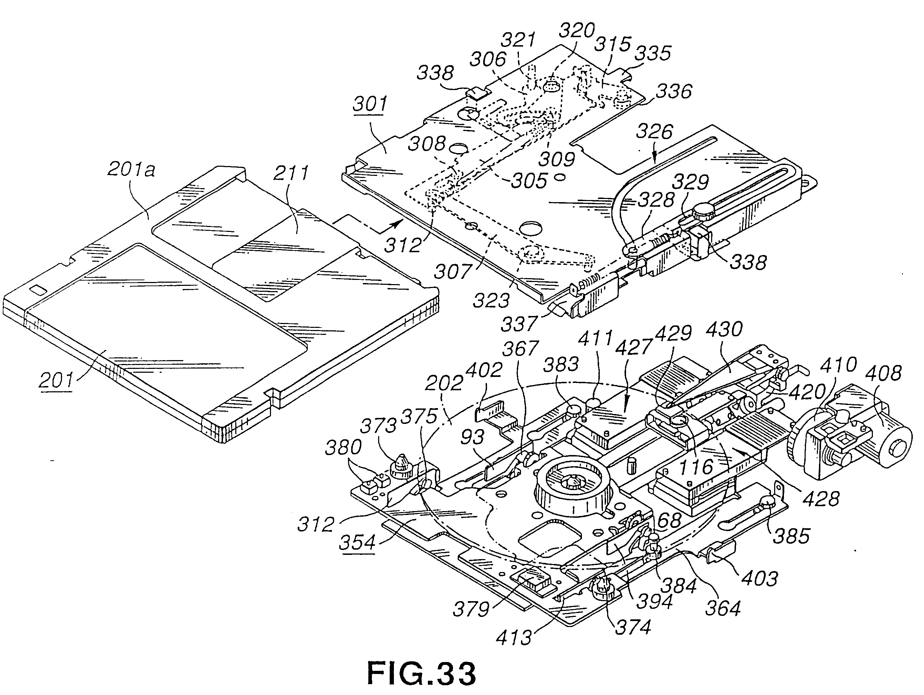

The present magneto-optical disc recording and/or reproducing apparatus comprises a disc loading unit, a disc rotating and driving unit, a cartridge positioning unit, a lifting unit and a head unit, as shown in Fig.33. The disc loading unit captures the disc cartridge 201 onto a predetermined loading position. The disc rotating and driving unit runs the magneto-optical disc 202 within the disc cartridge 201 into rotation. The cartridge positioning unit positions the disc cartridge 201 held at a predetermined loading position. The cartridge positioning unit and the disc rotating and driving unit are elevated and lowered relative to the disc cartridge 201 by the lifting unit. The head unit is made up of an optical pickup which is moved radially of the magneto-optical disc 202 across its inner and outer rims for recording and/or reproducing information signals on or from the disc 202 and a magnetic head unit for impressing an external magnetic field during recording of information signals on the magneto-optical disc 202.

### [6-a] Construction of Disc Loading Unit

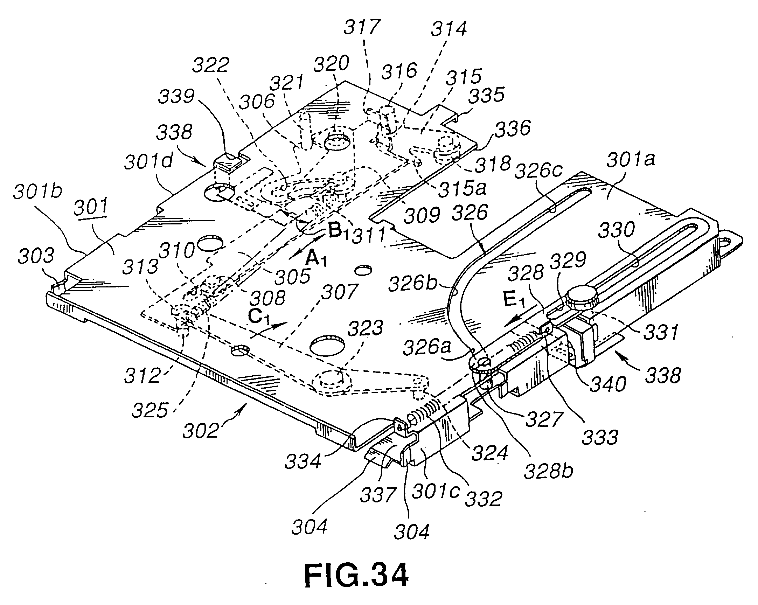

The disc loading unit includes a cartridge holder 301 provided with an automatic injection mechanism of automatically capturing the disc cartridge 201 onto its predetermined loading position, as shown in Fig.34. The cartridge holder 301 is designed as a planar rectangular casing having an insertion/ejection opening 302 which is designed as a through-opening extending through the entire length of the cartridge main body. A plurality of guide lugs 303, 304 are formed in the corner regions for assuring facilitated insertion of the disc cartridge 201 into the cartridge holder 301.

The automatic injection mechanism, provided on cartridge holder 301, includes a first injection plate 305 slidable in the inserting/ejecting direction of disc cartridge 201, a second injection plate 306 engaged in the pin engaging opening 228 in the disc cartridge 201 with movement of the first injection plate 305 to capture the disc cartridge 201, and a third injection plate 307 for forcibly sliding the first injection plate 305 in the depthwise direction of the cartridge holder 301.

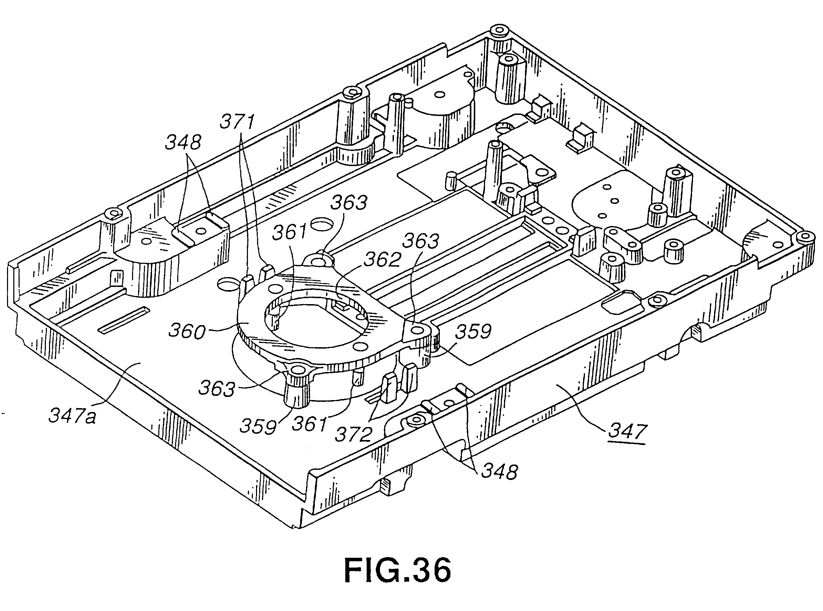

The first injection plate 305 is provided on a lower plate portion, not shown, at a side edge in the inserting direction of disc cartridge 201 of the cartridge holder 301. The first injection plate 305 is engaged with a pair of guide shafts 308, 309 mounted on the lower plate section of cartridge holder 301 so as to be reciprocated as shown by arrow A₁ in Fig.36 relative to the inserting direction of the disc cartridge 201 into cartridge holder 301. Guide grooves 310, 311 elongated along the inserting direction of disc cartridge 201 are formed in register with the guide shafts 308, 309 of the first injection plate 305. These guide grooves 310, 311 are engaged by guide shafts 308, 309 to permit reciprocation of the first injection plate 305.

The first injection plate 305 is formed with a cutout 313 engaged by an operating pin 312 provided on the third injection plate 307 as later explained. The cutout 313 is formed in the shape of a letter U at the distal end of the first injection plate 305 extended towards the insertion/ejection opening 302 of the first injection late 305, and is dimensioned to be engaged by an operating pin 312. A cartridge contacting portion 314 adapted to be abutted against the shutter 211 of the disc cartridge 201 introduced into the cartridge holder 301 is provided in the depthwise direction of the first injection plate 305. The contacting portion 314 is bent for facing the inside of the cartridge holder 301 via a cutout, not shown, formed in the lower plate section of cartridge holder 301.

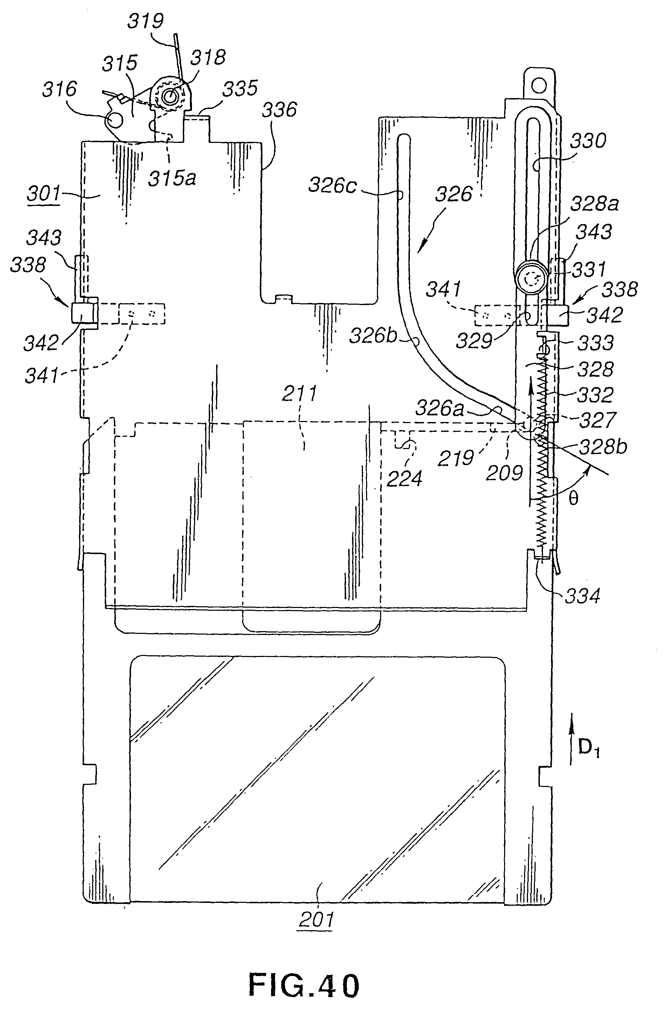

An actuating member 317 contacted with a trigger arm pin 316 mounted on a trigger arm 315 provided on the lower plate section of cartridge holder 301 is provided at the rear edge in the depthwise direction of the first injection plate 305. Similarly to the contacting portion 314, the actuating member 317 is bent for facing the inside of the cartridge holder 301 via a cutout formed in its lower plate section. The trigger arm 315, contacted with the actuating member 317, plays the part of maintaining the unloading condition of a slide as later explained and is mounted for rotation about a supporting shaft 318 provided on the lower plate section of cartridge holder 301. The trigger arm 315 has a retention pawl 315a on its distal end for being engaged by a retention pin provided on the slide, and a columnar-shaped trigger arm pin 316 adapted to be contacted with the actuating member 317. This trigger arm 315 is perpetually biased by a torsion coil spring 319 shown in Fig.40 in a direction in which the retention pawl 315a is engaged with a retention pin of the slide.

The second injection plate 306 is mounted for rotation relative to a rotary shaft 320 mounted upright on the lower plate section of cartridge holder 301 at a rear portion of the first injection plate 305 as shown by arrow B₁ in Fig.34. A cartridge capturing pin 321 adapted for being engaged in pin engaging opening 228 in the disc cartridge 201 inserted into the cartridge holder 301 via the insertion/ejection opening 302 is mounted upright on the second injection plate 306. Before the disc cartridge 201 is inserted into the cartridge holder 301, the capturing pi 321 is positioned outside the cartridge holder 301. As the disc cartridge 201 is inserted into the cartridge holder 301 until the pin engaging opening 228 is in register with the capturing pin 321, the second injection plate 306 is rotated for intruding the capturing pin 321 mounted upright on the injection plate 306 into the pin engaging opening 228.

The second injection plate 306 is formed with a cam groove 326. By the operation of the cam groove 326, the capturing pin 321 is positioned outside of the cartridge holder 301 in the unloading condition and, when the disc cartridge 201 is inserted into the cartridge holder 301 until the pin engaging opening 228 formed in the disc cartridge 201 is in register with the capturing pin 321, the second injection plate 306 is rotated for intruding the capturing pin 321 into the pin engaging opening 228. The cam groove 326 is adapted for being engaged by guide shaft 308 mounted upright on the cartridge holder 301 via guide groove 311 provided at back of the first injection plate 305.

The third injection plate 307 is adapted for forcibly sliding the first injection plate 305 in the depthwise direction of the cartridge holder 301. The third injection plate 307 is rotatable in the direction substantially at right angles to the inserting direction of the disc cartridge 201 about a pivot 323 on the lower plate section of the cartridge holder 301. The operating pin 312 engaged with the cutout 313 formed in the first injection plate 305 is mounted upright on one edge of the third injection plate 307. The opposite edge of the third injection plate 307 is provided with a holding pin 324 adapted for being contacted with a holding lug 431 formed by segmenting and folding a distal end part of the sliding section of a slide as later described towards cartridge holder 301. The third injection plate 307 is perpetually biased to be turned in the direction of arrow C₁ in Fig.34 by a tension coil spring 325 placed between the operating pin 312 and a guide shaft 309 facing guide grooves 311 and 322.

The cartridge holder 301 is provided with a shutter opening mechanism for automatically opening the shutter 211 of the disc cartridge 201 introduced via insertion/ejection opening 302 into the interior of cartridge holder 301. The shutter opening mechanism is mainly comprised of a cam groove 326 and a supporting member 328. The cam grove 103 is formed in the upper plate section 301a of the cartridge holder 301. The supporting member 328 is provided with a shutter opening pin 327 acting as a shutter opening member movable along cam groove 326.

The profile of the cam groove 326 is selected to describe a locus of opening the shutter 211 of the disc cartridge 201 introduced into the cartridge holder 301 in operative association with the inserting operation of the disc cartridge 201. The cam groove 326 is made up of an inclined inchoate section 326a inclined relative to the inserting direction of the disc cartridge 201 shown by arrow D₁ in Fig.40, an arcuate section 326b contiguous to the inclined section 326a and a rectilinear section 326c contiguous to the arcuate section 326b and extending substantially parallel to the inserting direction of the disc cartridge 201, as shown in Fig.40.

The inclined section 326a of the cam groove 326 plays the role of generating a component force for opening the shutter 211 of the disc cartridge 201 introduced via opening 302 into the inside of the cartridge holder 301. The inclined section 326a has an angle of inclination θ relative to the inserting direction of the disc cartridge 201 of at least 25° for generating the component force of causing rotation of the shutter opening pin 327 as a result of the insertion of the disc cartridge 201.

The arcuate section 326b, contiguous to the arcuate section 326a, plays the part of decreasing the length of the locus of movement of the shutter opening pin supporting member 328. If the arcuate section 326b is rectilinear, the locus of movement of the supporting member 328 is increased in length so that a rear end 328a of the supporting member 328 is rotated outwardly of cartridge holder 301. The result is that the rear end 328a tends to be contacted with exterior portions provided outside of the cartridge holder 301. By having the arcuate cam groove 326 as in the present embodiment, the locus of movement of the supporting member 328 is decreased to shorten the length of the locus of movement of the supporting member 328 to reduce the extension of the rear end 328a of the supporting member 328 to as small a value as possible. In this manner, it becomes possible to provide exterior components outside of cartridge holder 77 in proximity to cartridge holder 301 to render it possible to reduce the size of the magneto-optical disc recording and/or reproducing apparatus.

The rectilinear section 326c, contiguous to the arcuate section 326b, plays the part of shifting the disc cartridge 201 towards the rear end of the cartridge holder 301 in the fully opened state of the shutter 211. By shifting the disc cartridge 201 towards the rear end of cartridge holder 301, with the shutter 211 being opened, it becomes possible to avoid possible contact of the magnetic head and the optical pickup with the disc cartridge 201 and to eliminate a mechanism of elevating and lowering the magnetic head.

The supporting member 328 is formed as a substantially rectangular plate-shaped member having rounded foremost and rear ends 328b, 328a. The shutter opening pin 328 facing the cam groove 326 is formed upright on the foremost end 328b. The shutter opening pin 327 is columnar-shaped and depends into the inside of the cartridge holder 301 via cam groove 326. The pin supporting member 328 is also formed with an elongated slide opening 329 extending from its rear end 328a to its mid portion. The slide opening 329 is engaged by a movable guide pin 331, as a mating engaging portion, which is movable along a guide section 330 formed in the cartridge holder 301. The guide section 330 is an elongated groove extending parallel to the rectilinear section 326c of the cam groove 326 so as to be engaged by the movable guide pin 331. The movable guide pin 331 is a columnar-shaped main portion dimensioned to be movable along the guide section 330 and disc-shaped flanges at the upper and lower ends of the main portion.

The above-described shutter opening pin supporting member 328 is perpetually biased by the tension coil spring 332 in a direction in which the shutter opening pin 327 is positioned at the inchoate end of the cam groove 326 as indicated by arrow E₁ in Fig.34. The tension coli spring 332 has its one end retained by a spring retainer 333 provided on the supporting member 328, while having its other end retained by a spring retainer 334 formed by segmenting the upper plate section 301a of the cartridge holder 301. As a result thereof, the coil spring 332 causes the shutter opening pin 327 to be positioned at the inchoate position of the cam groove 326, that is at the initial position of the inclined section 326a.

The upper plate section 301a of the cartridge holder 301 is formed with a position controlling member 335 for position-controlling the disc cartridge 201 inserted into the cartridge holder 301 so that the disc cartridge will not be intruded beyond the loading position which is the predetermined loading position. The controlling member 335 is provided for being protruded beyond the rear edge of the upper plate section 301a and has its foremost part bent so as to depend in the inside of cartridge holder 301. The cartridge holder 301 is formed with a cutout faced by the magnetic head and the optical pickup.

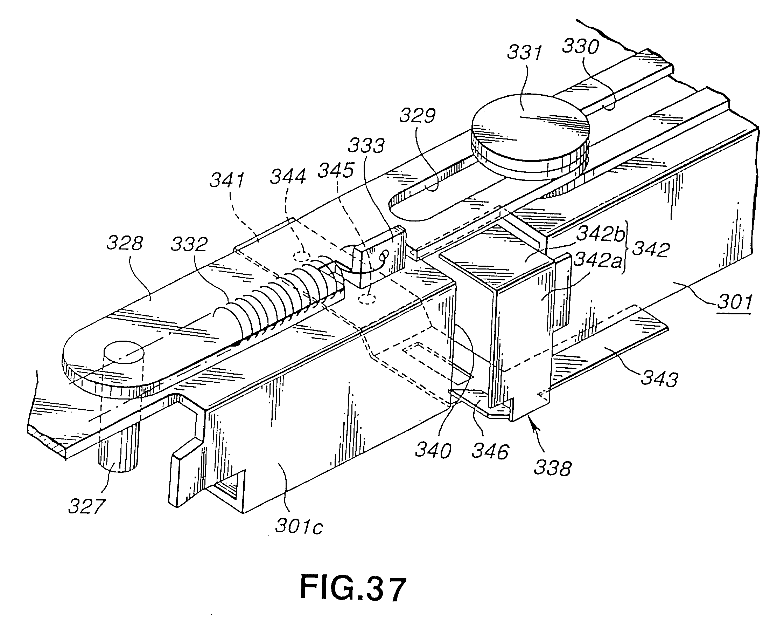

Besides, the cartridge holder 301 is provided with thrusting members 338 acting as a thrusting mechanism during loading for thrusting and securing the disc cartridge 301 to a positioning member 337 provided in the cartridge holder 301 for setting the height of the cartridge main body. These thrusting members are provided in cutouts 339, 340 formed at mid portions of both sidewall sections 301b, 301c in the inserting direction of the disc cartridge 201 by partially removing the upper plate portion 301a. One of the thrusting members 338 is shown in Fig.37 and comprises a supporting section 341, a thrusting section 342 and an evading section 343. The supporting section 341 is secured to the lower plate section of the cartridge holder 301. The thrusting section 342 is contacted only during loading with an upper surface 201a of the disc cartridge 201 for resiliently biasing the disc cartridge 201 towards the cartridge positioning section 337. The evading section 343 causes the cartridge thrusting section 342 to a non-contact position relative to the disc cartridge 201.

The thrusting member 338 is formed integrally by bending thin metal plate spring to a predetermined shape. The supporting section 341 is substantially rectangular in profile and stepped at its mid portion. The supporting section 341 has its proximal portion riveted at 344, 345 to the lower plate section of the cartridge holder 301 and has its distal end remaining unsupported in a cantilevered fashion.

The thrusting section 342 is made up of a connecting portion 342a connecting to the foremost part of the supporting section 341 and a thrusting portion 342b provided at the distal end of the connecting portion 342a. The connecting portion 342a is provided outside of the sidewall section 301c of the cartridge holder 301 and at right angles to the supporting section 341 for evading contact with the disc cartridge 201 inserted into cartridge holder 301. The thrusting portion 342b is provided at the distal end of the connecting portion 342a substantially at right angles thereto for facing the cutout 340. The thrusting section 342b is contacted during loading with the upper surface 201a of disc cartridge 201 inserted into cartridge holder 301 for thrusting and securing the disc cartridge 201 to the positioning section 337 provided on the cartridge holder 301 and is evaded out of contact with the disc cartridge 201 during unloading.

The evading section 343 is substantially rectangular in profile and extended in the direction of insertion of the disc cartridge 201 from the connection portion between the supporting section 341 and the thrusting section 342. The evading section 343 is adapted for being contacted by an actuating lug provided on the slide for actuating the thrusting section during unloading while not being contacted by the actuating lug during loading. The connecting portion between the supporting section 341 and the thrusting section 342 on the opposite side of the evading section 343 is formed with a bent portion 346 for preventing the actuating lug from being engaged with the thrusting member 338 during transition from the loading state to the unloading state.

With the above-described thrusting member 338, the actuating lug actuating the thrusting section during the unloading state is contacted with the evading section 343 for raising the cartridge thrusting section 342 for bringing the thrusting portion 342b of the thrusting section 342 out of possible contact with the disc cartridge 201 and the supporting member 328 as the disc cartridge is introduced into the cartridge holder 301. On the other hand, during loading, the actuating lug is not contacted with the evading section 343 to release the supporting action of the thrusting section 342 so that the thrusting portion 342b of the thrusting section 342 faces the inside of the cartridge holder 301 so as to be contacted with the upper surface 201a of the disc cartridge 201 for resiliently biasing the disc cartridge 201 towards the cartridge positioning section 337. That is, the thrusting member 338 causes the thrusting portion 342b of the thrusting section 342 to be receded into and projected from the cartridge holder 301 with the progress of the loading operation. Meanwhile, the thrusting member 338 provided on the opposite sidewall section 301b of cartridge holder 301 is of identical construction and hence is not explained for simplicity.

It is noted that the cartridge holder 301, provided with the above-described automatic injection mechanism and the shutter opening device, is secured by having its lower plate section set and screwed onto a stationary mounting section 348 maintained at a predetermined height from the bottom surface 347a of a chassis 347 shown in Fig.36. The height from the bottom surface 347a of chassis 347 to the positioning section 337 of cartridge holder 301 represents the reference height of the disc cartridge 201.

### [6-b] Disc Rotating Driving Unit

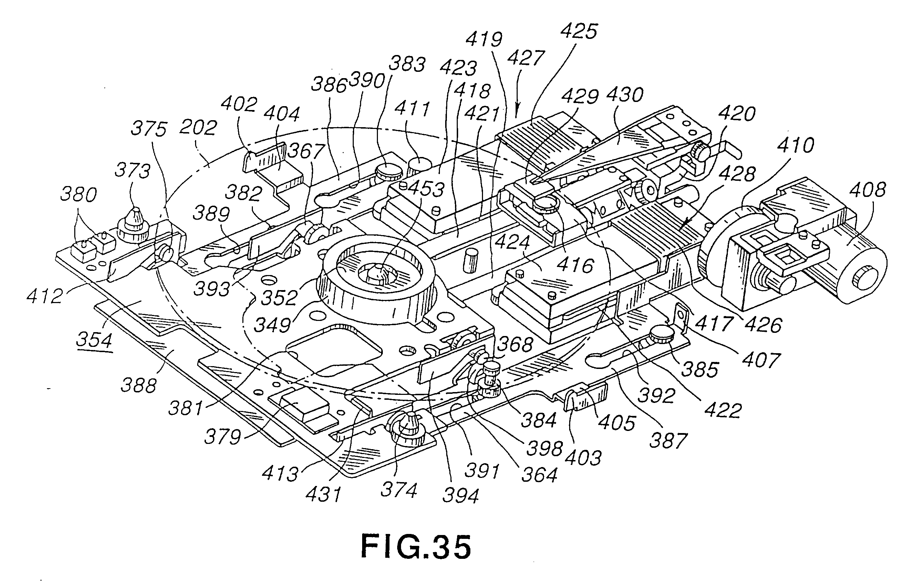

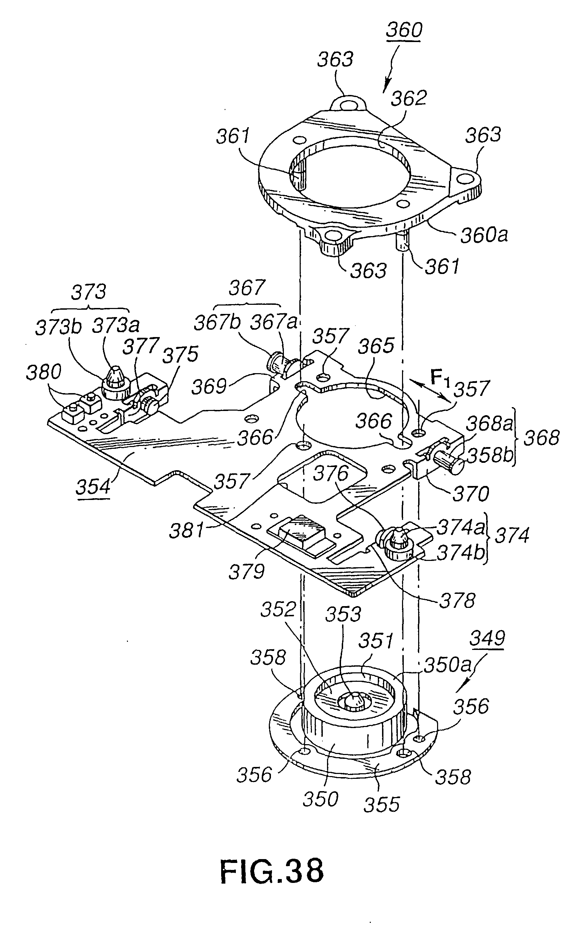

The disc rotating and driving unit includes a spindle motor 349 driven in a lifting direction towards and away from the disc cartridge 201 by lifting means, as shown in Fig.35, as later explained. The spindle motor 349 includes a columnar-shaped spindle supporting member 350, opened at a side facing a chassis, not shown, and a rotating driving motor, not shown, enclosed within the spindle supporting member 350, as shown in Fig.38. The spindle supporting member 350 has an annular planar surface 350a, opposite to its side facing the chassis, as a disc setting surface for setting the magneto-optical disc 202 contained within the disc cartridge 201. A recess 351 for holding the clamping hub 202a of the magneto-optical disc 202 is formed in the spindle supporting member 350 as a circular recess lower in level than the disc setting surface 350a. A magnet 352 for magnetically attracting the clamping hub 202a of the magneto-optical disc 202 is placed within the recess 351. The magnet 352 is formed as a disc dimensioned to be held within recess 351 and has a central through-hole adapted to be passed through by a spindle shaft 353. The spindle shaft 353 of the spindle motor 349 is protruded above the setting surface 350a at the center of the recess 351.

The spindle motor 349 is mounted on a lifting plate 354 which is elevated and lowered towards and away from disc cartridge 201 by the lifting device with the progress of the loading operation. The spindle motor 349 has a disc-shaped mounting portion 355 on the lower outer periphery of the spindle supporting member 350 facing the chassis 347. The spindle motor 349 is secured to the mounting portion 355 by a bolt or the like with a mounting opening 357 in the lifting plate 354 in register with a circular mounting opening 356 formed in the mounting portion 355.

The spindle mounting portion 355 of the spindle motor 349 is formed with circular guide openings 358 for lifting on a diametrical line passing through the center of the spindle supporting member 350. These circular guide openings 358 are passed through by lifting guide pins 361 of an annular height setting member 360 maintained at a predetermined height by a plurality of, herein three ribs 359 mounted on chassis 347. The spindle motor 349 may be elevated and lowered along these lifting guide pins 361 by these pins 361 being passed through the guide openings 358.

The height setting member 360 is formed as a annulus having a central circular through-hole 362 dimensioned to pass the supporting member 350 therethrough, as shown in Fig.36. The outer rim portion of the height setting member 360 is formed with mounting portions 363 facing the ribs 359 formed on the chassis 347 for securing the height setting member 360 on the ribs 359. The lower surface 360a of the height setting member 360 is used as a spindle height setting surface on which the lifting plate 354 elevated by the lifting unit is abutted for controlling the height of the spindle motor 349. As the lifting plate 354 fitted with spindle motor 349 is raised by the lifting unit, the position at which the lifting plate 354 is contacted with the lower surface 360a of the height setting member 360 is used as the reference height position of the spindle motor 349.

### [6-c] Construction of Lifting Unit

The lifting unit includes a slide 364 arranged on the bottom surface 347a of chassis 347, as shown in Fig.35. As the disc cartridge 201 is being loaded, the slide 364 drives the lifting plate 354, having cartridge positioning means for positioning the disc cartridge 201 and the disc rotating driving unit, in a vertical direction relative to the disc cartridge 201, maintained at the cartridge loading position by the above-described disc loading unit.

The lifting plate 354 is designed as a substantially T-shaped plate having a protruded mounting portion for spindle motor 349, as shown in Figs.35 and 38. The lifting plate 354 has a circular through-hole 365 for being passed through by the spindle supporting member 350 of the spindle motor 349. A pair of elongated openings 366 are formed in continuation to the through-hole 365 for being passed through by guide pins 361 mounted on the height position setting member 360. The elongated openings 366 are formed for being faced by guide pins 361.

The lifting plate 354 is provided with first pins 367, 368 making up a first lifting driving unit for elevating and lowering the spindle motor 349. These first pins 367, 368 are comprised of cylindrical-shaped barrel sections 367a, 368a and circular flanges 367b, 368b provided at the distal ends of the barrel sections 367a, 368a and having diameters larger than those of the barrel sections 367a, 368a, respectively. These first pins 367, 368 are mounted for rotation on pin mounting lugs 369, 370 formed by bending the lifting plate towards chassis 347 on either sides of the elongated openings 366. The first pins 367, 368 are adapted for being elevated and lowered by having the barrel sections 367a, 368a interposed and guided between a pair of supporting pillars 371, 372, mounted on the bottom surface 347a of the chassis 347, as shown in Fig.36. The lifting plate 354 may be prevented from being shifted in a direction indicated by arrow F₁ in Fig.38 by the flanges 367b, 368b larger in diameter than the barrel sections 367a, 368a.

The lifting plate 354 is also provided with positioning pins 373, 374, as cartridge positioning means, for being engaged with the pin engaging openings 225, 226 formed in the disc cartridge 201 for setting the horizontal loading position of the disc cartridge 201. The cartridge positioning pins 373, 374 are provided for facing the engaging openings 225, 226, respectively, and rounded at their distal ends to permit smooth engagement of the pins in the pin engaging openings. Besides, the positioning pins 373, 374 are formed with disc-shaped flanges 373b, 374b playing the part of stops by being engaged with the rim of the pin engaging openings 225, 226, respectively.

The lifting plate 354 is provided with second pins 375, 376 making up a second lifting unit for elevating and lowering the positioning pins 373, 374, respectively. These second pins 375, 376 are mounted for rotation o pin mounting lugs formed by bending a part of the lifting plate in proximity to the positioning pins 373, 374 towards chassis 347. The lifting plate 354 is also fitted with a temperature sensor 379 and a detection switch 380 detecting the position of the mistaken erasure inhibiting member 227 provided on the disc cartridge 201. The temperature sensor 379 is provided in proximity to the positioning pin 374, while the detection switch 380 is provided in proximity to the other positioning pin 373. The lifting plate 354 is formed with a substantially rectangular through-hole for preventing the conflict of the lifting plate with pivot 323 which is adapted for rotatably supporting the third injection plate 307 mounted on cartridge holder 301.

On the other hand, slide 364 is adapted for being slid on chassis 347 by being guided by guide posts 382, 383, 384 and 385 fixed on chassis 347, as shown in Fig.35. The slide 364 is made up of a pair of slide sections 386, 387, extending parallel to and on both sides of the spindle motor 349, and a connection section 388 interconnecting the slide sections 386, 387. The slide sections 386, 387 are formed with elongated guide post slide openings 389, 390, 391 and 392 in register with the guide posts 382 to 385 secured on chassis 347.

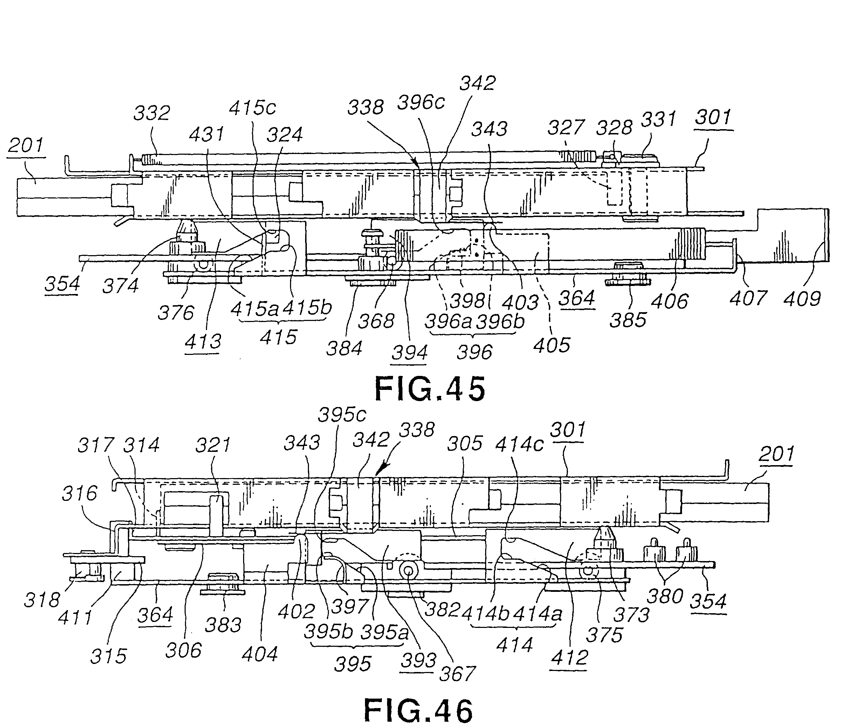

The slide sections 386, 387 are provided with first cams 393, 394, as first lifting means, adapted for being engaged with the first pins 367, 368 for elevating and lowering the spindle motor 349 relative to the disc cartridge 201. As shown in Figs.45 and 46, these first cams 393, 394 have cm grooves 395, 396 engaged by the first pins 367, 368, respectively. These cam grooves 396, 395 are made up of inclined sections 395a, 396a inclined at a predetermined angle relative to chassis 347 and parallel sections 395b, 396b extending parallel to chassis 347. The inclined sections 395a, 396a play the part of elevating the spindle motor 349, while the parallel sections 395b, 396b play the part of maintaining the spindle motor 349 at the maximum height position. When the first pins 367, 368 arrive at the parallel sections 395b, 396b, the lifting plate 354, fitted with the spindle motor 349, is caused to bear against the height setting member 360 for setting the predetermined height position of the spindle motor 349. The first pins 367, 368 are kept at this time out of contact with upper end faces 395c, 396c facing the parallel sections 395b, 396b.

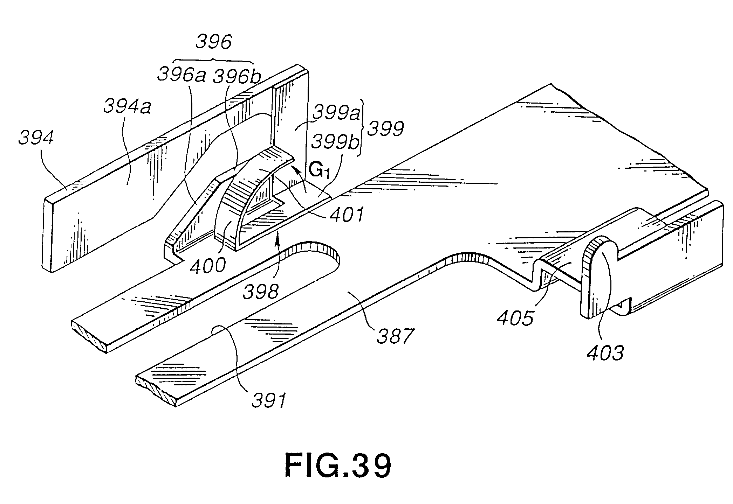

Spring members 397, 398 for positively setting the elevated position of the spindle motor 349 are provided in proximity to these first cams 393, 394, respectively. Since these spring members 397, 398 are of identical construction, only one of them is hereinafter explained. The spring member 398 is formed by bending a thin metal plate of spring material, as shown in Fig.39. The spring member 398 has a substantially L-shaped mounting section 399 made up of an upstanding portion 399a and a proximal portion 399b, and is secured to the first cam 394 by riveting its upstanding portion 399a to the sidewall section of the first cam 394. The foremost part of the proximal portion 399b is formed with an upright portion 400 and a curved portion 401 integrally extending form the foremost part of the upright portion 400 for describing a moderate curve towards the parallel section 339b of the first cam 394.

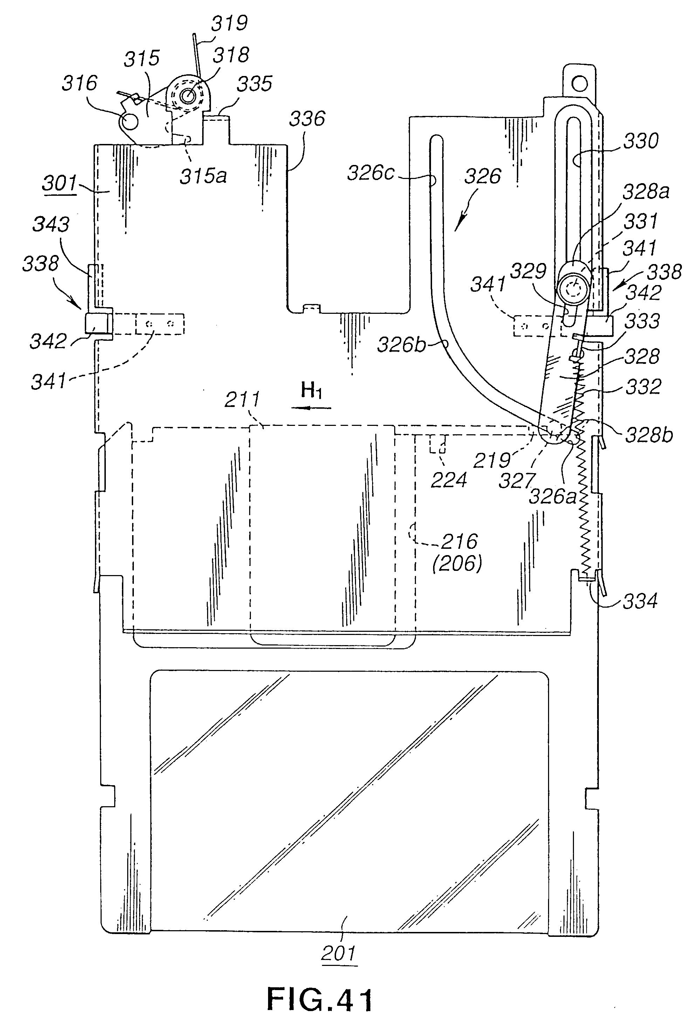

In the unloading condition, the curved portion 401 is adapted for being contacted initially by the first pin 368 only after the first pin 368 climbs up the inclined section 396a to reach the parallel section 396b. Besides, the curved portion 401 has its tip end slightly protruded beyond the parallel section 396b. Therefore, when the first pin 368 reaches the parallel section 396b to roll thereon, the first pin 368 is contacted with the curved portion 401 to flex the portion 401 in the direction of diminishing its curvature. Under the elastic pressure of the curved portion 401 in the direction indicated by arrow G₁ in Fig.41, the lifting plate 354 supporting the first pin 368 is thrust against the spindle height setting member 360. As a result thereof, spindle motor 1 is accurately positioned at its elevated position and stably maintained in this condition.

The slide sections 386, 387 are provided with actuating lugs 402, 403 causing the disc thrusting member 338 to be receded into and projected from the inside of the disc cartridge 201 as a result of the loading operation. These actuating lugs 402, 403 are in the form of arcuate projections formed at the foremost parts of extensions 404, 405 formed as steps provided obliquely at back of the first cams 393, 394 and extending substantially at right angles to the slide sections 386, 387. The actuating lugs 402, 403 are adapted for being contacted and not being contacted with the evading section 343 of the thrusting member 338 for causing the thrusting member 338 to be receded into and projected out of the cartridge holder 301, respectively.

The rear edge of the slide section 338 is formed with a spring retainer 407 for a return spring 406 adapted for forcibly sliding the slide 364 from its loading position to its unloading position, as shown in Fig.45. The return spring 406 has its one end retained by the spring retainer 407 and its other end by guide post 384 on the chassis 347 for resiliently biasing the slide 364 at all times towards the loading position. A restoration piece 409 is formed at the rear edge of the slide section 387. With the restoration piece 409, slide 364 is forcibly restored by a loading motor 408 from the loading position to the unloading position against the bias of the return spring 406. The restoration piece 409 is engaged with a columnar-shaped engaging pin, not shown, provided on a transmission gear 410 adapted for transmitting rotation of the loading motor 408. As the transmission gear 410 is rotated by the rotation of the loading motor 408, the engaging pin mounted upright on the transmission gear 410 is engaged with the restoration piece 409 for restoring the slide 364 from the loading position to the unloading position.

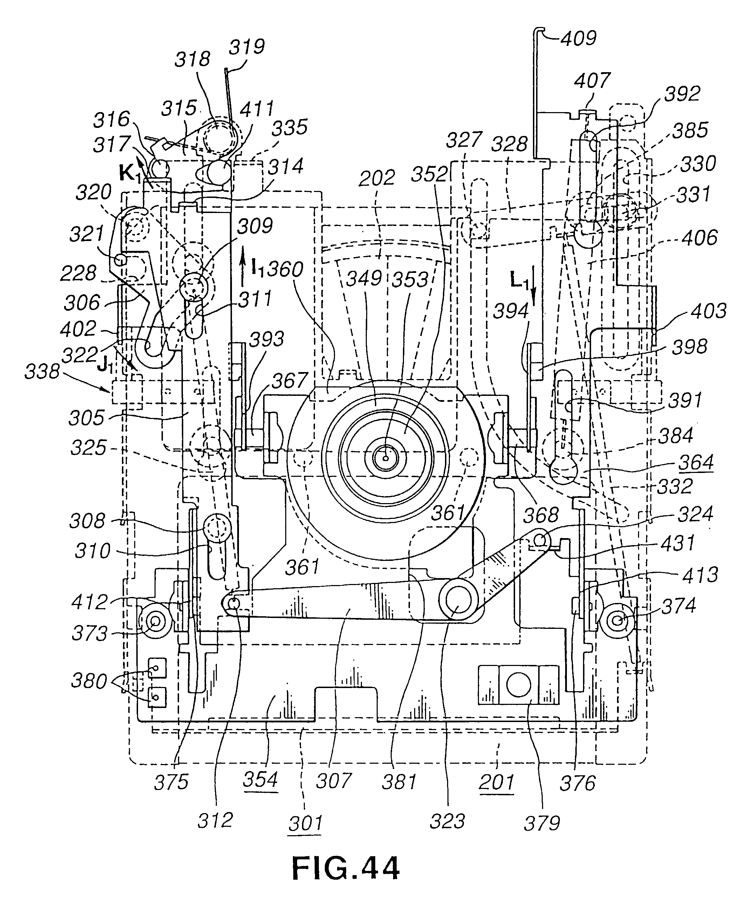

When the slide 364 is brought by the loading motor 408 to the unloading position, retention pawl 315a of trigger arm 315 rotatably mounted on cartridge holder 301 is engaged with columnar-shaped retention pin 411 provided on the rear edge of the opposite side slide section 386 for maintaining the unloading position of the slide 364, as shown in Fig.44.

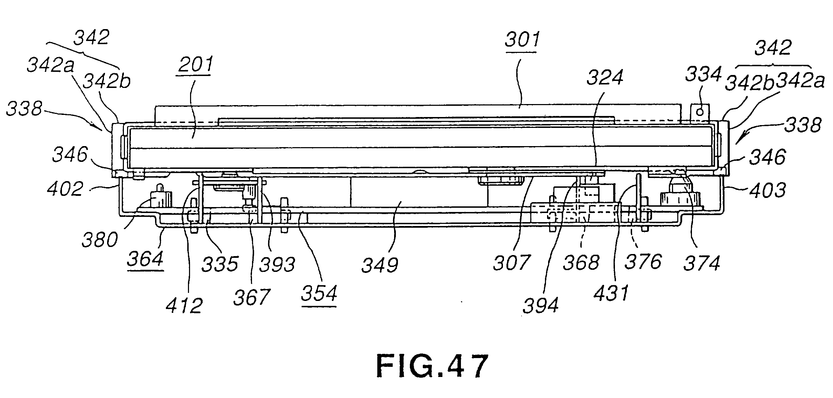

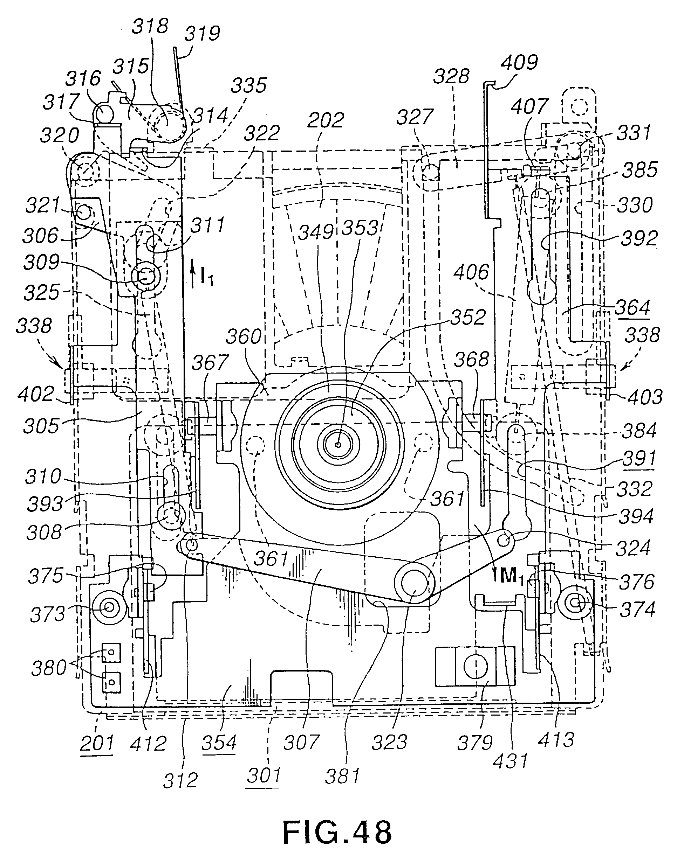

On the other hand, the connection section 388 is provided with second cams 412, 413, as first lifting means, adapted for elevating and lowering positioning pins 373, 374 adapted in turn for positioning the disc cartridge 201. Similarly to the first cams 393, 394, these second cams 412, 413 have cam grooves 414, 415, engaged by the second pins 375, 376, respectively, as shown in Figs.47 and 48. These cam grooves 414, 415 are made up of inclined sections 414a, 415a, inclined at predetermined angles relative to chassis 347, and parallel sections 414b, 415b extending parallel to chassis 347. The inclined sections 414a, 415a play the role of elevating the positioning pins 373, 374, while the parallel sections 414b, 415b play the role of maintaining the positioning pins 373, 374 at the maximum height positions.

When the second pins 375, 376 arrive at the parallel sections 414b, 415b, the positioning pins 373, 374 provided on the lifting plate 354 are engaged with the engaging openings 225, 226 in the disc cartridge 201 for positioning the disc cartridge 201. For assuring accurate positioning of the disc cartridge 201, the second pins 375, 376 are adapted for not being contacted with upper end faces 414c, 415c facing the parallel sections 414b, 415b.

The angle of inclination of the inclined sections 414a, 415a of the second cams 412, 413 is selected to be larger than that of the inclined sections 395a, 396a of the first cams 393, 394, in order for the positioning pins 373, 374 to be elevated temporally in advance of the spindle motor 349. The second pins 375, 376 reach the parallel sections 414b, 415b of the second cams 412, 413 before the first pins 367, 368 reach the parallel sections 395b, 396b of the first cams 393, 394 so that the disc cartridge 201 is positioned by the positioning pins 373, 374. Subsequently, the spindle motor 349 is set at the predetermined height level.

The first cams 393, 394 may be of an identical cam profile as the second cams 412, 413 and shifted in their positions relative to the first cams so that the second cams are contacted by the second pins 375, 376 at an earlier timing than that at which the first cams are contacted by the first pins 367, 368. This enables the positioning pins 373, 374 to be elevated temporally in advance of the spindle motor 349 to assure positive chucking with the disc cartridge 201 maintained reliably in position.

### [6-d] Construction of Optical System and Magnetic Head Device

The optical pickup 417 includes an object lens 416 for converging a laser beam and radiating the converged laser beam to a signal recording surface of the magneto-optical disc 202 run which is into rotation by spindle motor 349. The optical pickup 417 is provided on a carriage 420 which may be transported along a pair of parallel guide rails 418, 419 arranged radially of the magneto-optical disc 202. The optical pickup 417 is moved in a facing relation relative to and in parallel with the signal recording surface of the magneto-optical disc 202 by linear motors 427, 428 made up of magnets 421, 422, yokes 423, 424 and driving coils 427, 428.

The magnetic head unit includes a magnetic head 429 having a coil for impressing an external magnetic field of a predetermined strength on the signal recording surface of the magneto-optical disc 202. The magnetic head 429 is mounted on the distal end of a magnetic head supporting arm 430, having its proximal end secured to carriage 420, so that the magnetic head 429 is disposed facing the object lens 416 with the magneto-optical disc 202 in-between. Consequently, when the optical pickup 417 is fed radially of the magneto-optical disc 202, the magnetic head 429 is transported radially of and across the inner and outer rims of the disc 202, in a timed relation to the movement of the optical pickup 417, at the same time that the magnetic head 429 is kept in a position of being faced by the object lens 416.

### [7] Explanation of the Loading Operation of Disc Cartridge

The operation of loading the above-described disc cartridge 201 onto the magneto-optical disc recording and/or reproducing apparatus according to the third embodiment of the present invention is hereinafter explained.

The disc cartridge 201 is first introduced in a regular direction into the inside of the cartridge holder 301 via its cartridge insertion/ejecting opening 302. The shutter opening pin 327, maintained at its initial position, is caused to bear against the front side 209 of the disc cartridge 201, as shown in Fig.40.

As the disc cartridge 201 is further introduced from this condition into the inside of the cartridge holder 301, a component of force is induced in the shutter opening pin 327 which is thrust by the disc cartridge 201. As a result thereof, the shutter opening pin 327 is moved along the inclined section 326a of the cam grove 326.

As the disc cartridge 201 is thrust towards the inside of the cartridge holder 301, the supporting member 328 is rotated about guide pin 331 mounted at the initial position at one end of the guide section 330 provided on the cartridge holder 301 against the bias of the tension coil spring 322 installed between the supporting member 328 and the cartridge holder 301. As a result thereof, the shutter opening pin 327, mounted at the foremost part 328b of the supporting member 328, is moved along the rectilinear section 326a of the cam groove 326.

Thus the shutter 211 is moved in a direction of opening the apertures 206, 216 in the disc cartridge 201, against the bias of a torsion coil spring enclosed within the cartridge main body 203, as indicated by arrow H₁ in Fig.41.

As the disc cartridge 201 is intruded further into the inside of cartridge holder 301, shutter opening pin 327 is moved along the arcuate section 326b of cam groove 326 for shifting the shutter 211 further. When the shutter opening pin 327 is moved along the arcuate section 326b, the supporting member 328 is rotated about the guide pin 331 which is disposed at the same initial position as that when the shutter opening pin 327 has been moved along the inclined section 326a. That is, as long as shutter opening pin 327 is moved from the inclined section 326a up to the arcuate section 326b, the guide pin 331 is at the initial position, because the slide groove 329 is formed in the supporting member 328. As a result thereof, the locus of movement of the supporting member 328 is extremely small throughout the inclined section 326a and the arcuate section 326b so that the rear end 328a is scarcely protruded outwardly of the disc cartridge 201.

When the shutter opening pin 327 reaches the rear end of the arcuate section 326b, the shutter opening pin 327 is intruded into the snap-engaging section 224 formed in the cartridge main body 203, as shown in Fig.44.

This causes the apertures 206, 216 of the disc cartridge 201 to be opened fully to expose the magneto-optical disc 202 contained in the cartridge main body 203.

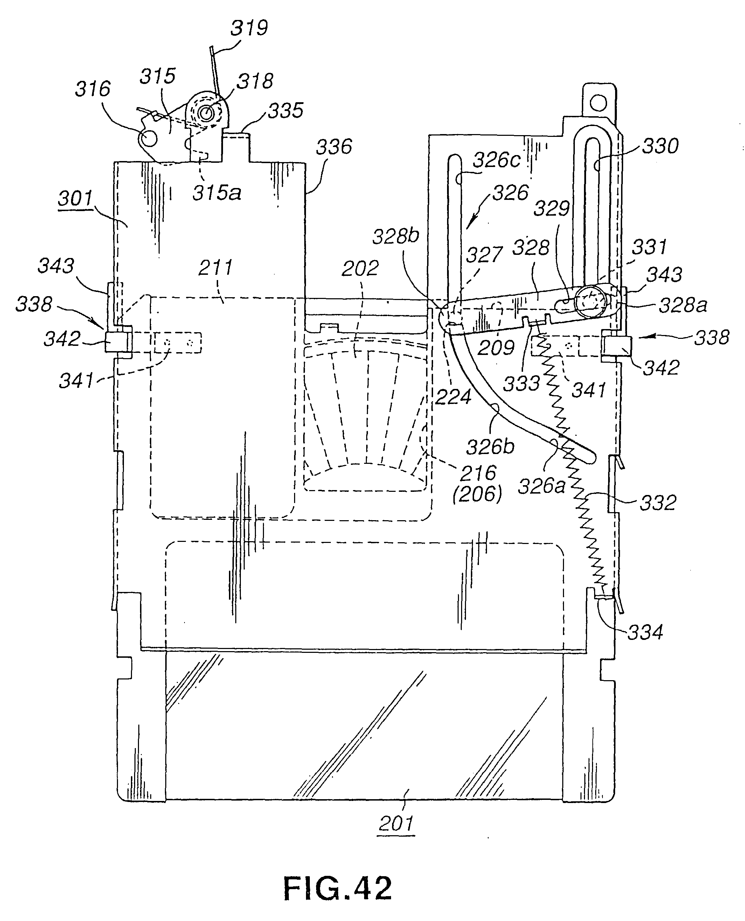

When the disc cartridge 201 is intruded inwardly of the cartridge holder 301, guide pin 331 is caused to bear against the front side 209 of the cartridge main body 203. As the disc cartridge 201 is moved further inwardly into the inside of cartridge holder 301, the supporting member 328 is moved along the guide section 330, while maintaining the condition shown in Fig.42.

The disc cartridge 201 is caused to bear against the contact portion 314 of the first injection plate 305 slidably mounted on the cartridge holder 301, as shown in Figs.44 to 47.

When the disc cartridge 201 is inserted further inwardly from this condition, the first injection plate 305 is slid, along with the disc cartridge 201, along guide shafts 308, 309 secured to cartridge holder 301, in the inserting direction of the disc cartridge 201, as indicated by arrow H₁ in Fig.44.

With the sliding movement of the first injection plate 305, the second injection plate 306 is moved in the inserting direction of the disc cartridge 201, along with the first injection plate 305, at the same time that the second injection plate 306 is rotated along cam groove 322 formed in the second injection plate 306 as indicated by arrow J₁ in Fig.44.

As a result of the rotation of the second injection plate 306, capturing pin 321 provided on the second injection plate 306 is intruded into the pin engaging opening 228 formed in disc cartridge 201.

When the disc cartridge 201 is moved further inwardly into the cartridge holder 301, the actuating piece 317 provided at the rear edge of the first injection plate 305 is contacted with trigger arm pin 316 of the trigger arm 315 rotatably mounted on the chassis.

As the first injection plate 305 is moved further towards rear, trigger arm 315 is rotated about pivot 318 as the center of rotation, as indicated by arrow K₁ in Fig.44, for releasing engagement with the retention pin 411 secured to the slide 364.

As a result thereof, the slide 364 starts to be slid on the chassis 347 towards the inserting/ejection opening 302, as indicated by arrow L in Fig.46, as the slide 364 is guided along guide shafts 382 to 385 secured to chassis 347, by the operation of the return spring 406 mounted between the slide 364 and the cartridge holder 301.

This releases the engagement between the holding lug 413 provided on the slide 364 and the holding pin 324 of the third injection plate 327. The third injection plate 327 is now forcibly rotated, under the action of the tension coil spring 325 installed between the third injection plate and the cartridge holder 301, in a direction shown by arrow M in Fig.48, about pivot 323 as the center of rotation. When the third injection plate 307 is rotated, the holding pin 324, mounted upright on the first injection plate 305, is slid in the inserting direction of the disc cartridge 201, as indicated by arrow N₁ in Fig.48.

Since the capturing pin 321 of the second injection plate 306 is already intruded at this time into the pin engaging opening 228 in the disc cartridge 201, disc cartridge 201 is automatically captured in the depthwise direction of cartridge holder 301, until ultimately the shutter 211 of the disc cartridge 201 is caused to bear against the position controlling member 335 provided in the cartridge holder 301 for setting the loading position of the disc cartridge 201.

Since the slide 364 is slid towards the inserting/ejecting opening 302 for releasing the engagement between the evading section 343 of the thrusting member 338 and the actuating lug 402 provided on slide 364, the thrusting section 342b of the thrusting member 338 is intruded into the inside of cartridge holder 301, beginning from the state enabling the disc cartridge 201 to be inserted into cartridge holder 301 as shown in Figs.45 to 47, for thrusting the upper surface 201a of disc cartridge 201 downwards.

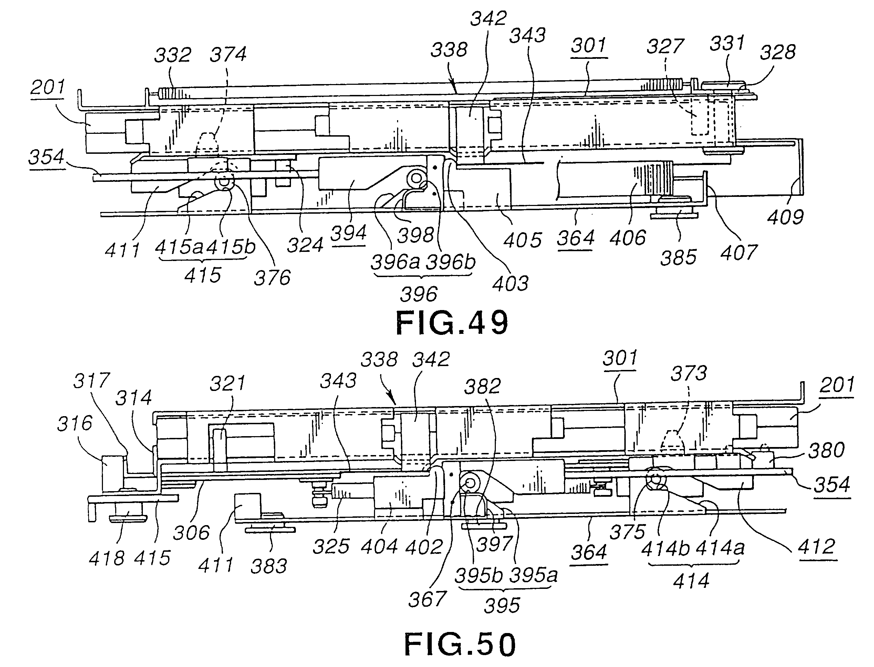

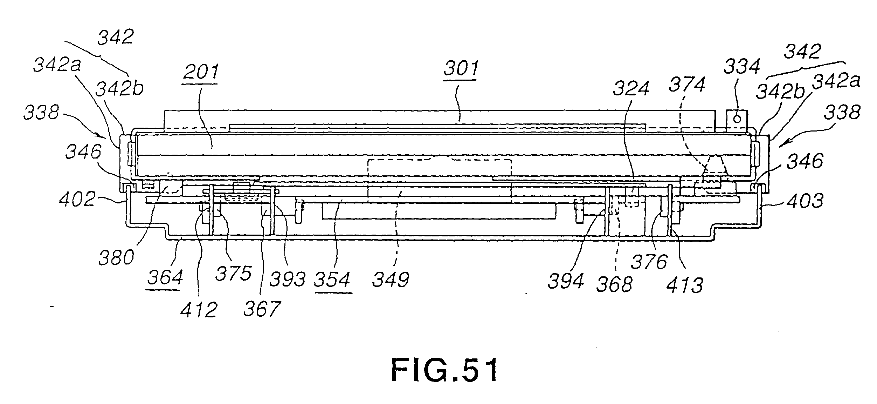

As a result thereof, disc cartridge 201 is thrust against the positioning section 337 of cartridge holder 301, under the resiliency of the thrusting member 338, as shown in Figs.49 to 51, so as to be maintained at a predetermined height level.

On the other hand, by the slide 364 being slid towards the insertion/ejecting opening 302, first cams 393, 394 provided on slide 364 and second cams 412, 413 are engaged with the first pins 367, 368 and second pins 375, 376, respectively.

When the slide 364 is slid further towards the insertion/ejection opening 302, the first pins 367, 368 are elevated on the inclined sections 395a, 396a of the first cams 393, 394, as they are rotated about their own axes, at the same time that the second pins 375, 376 are elevated on the inclined sections 414a, 415a of the second cams 412, 413, as they are rotated about their own axes.

Since the angle of inclination of the inclined sections 414a, 415a of the first cams 393, 394 is selected to be larger than that of the inclined sections 395a, 396a of the second cams 393, 394, the first pins 375, 376 reach the parallel sections 414b, 415b of the first cams 367, 368 at an earlier timing than the second pins 367, 368.

As a result thereof, the foremost part of the lifting plate 354 is raised in this manner at an earlier timing than its rear end, so that the cartridge positioning pins 373, 374 provided at the foremost part of the lifting plate is elevated faster than the spindle motor 349. Consequently, the positioning pins 373, 374 are engaged in the engaging openings 225, 226 in the disc cartridge 201 for positioning the disc cartridge 201.

The first pins 367. 368 then arrive at the parallel sections 395b, 396b of the first cams 393, 394, the spindle motor 349 being then raised and the lifting plate 354 being contacted with the height level setting member 360. The spindle motor is biased to and maintained at a predetermined height level by the spring members 397, 398, mounted in proximity to the first cams 393, 394.

The result is that the spindle shaft 353 of the spindle motor 349 is intruded to a clamping hub 202a of the magneto-optical disc 202 contained in the disc cartridge 201 for accurately clamping the magneto-optical disc 202.

For ejection, the loading motor 408 is run into rotation so that an engaging pin mounted upright on the transmission gear 410 transmitting rotation of the loading motor 408 is engaged with the restoration member 409 provided on the slide 364 for restoring the slide 364 from its loading position to its unloading position against the bias of return spring 406.

As a result thereof, an operation which is the reverse of the above-described loading operation is produced, in such a manner that the positioning pins 373, 374 are caused to descend temporally in advance of the spindle motor 349, while the third injection plate 307 is rotated by the sliding movement of the slide 364. The first injection plate 305, connected to the third injection plate 307, is forcibly slid to its unloading state, until ultimately the disc cartridge 201 is forcibly discharged out of the cartridge holder 301.

## Claims

1. A magneto-optical disc recording and/or reproducing apparatus containing a disc cartridge loading device for a disc cartridge (201) having a disc (202) rotatably contained in a cartridge main body (203), comprising
rotational driving means (1) for rotationally driving the disc (202) contained in said disc cartridge (201),
means (63, 64) for positioning said disc cartridge (201) in the horizontal direction by being engaged with a positioning hole (225, 226) formed in said disc cartridge (201), characterized by
driving means having a first driving part (36, 37, 44, 45, 6, 7) for lifting said rotational driving means (1) and a second driving part (50, 51, 65, 66, 67) for lifting said positioning means (63, 64), said driving means having said second driving part (50, 51, 65, 66, 67) driven temporally in advance of said first driving part (36, 37, 44, 45, 6, 7) for engaging said positioning means (63, 64) in said positioning hole (225, 226) in said disc cartridge (201) temporally in advance of driving said rotational driving means (1).

2. A magneto-optical disc recording and/or reproducing apparatus as claimed in claim 1 wherein said first driving part (36, 37, 44, 45, 6, 7) comprises a first cam section (44a, 45a) and a first movable member movable along said first cam section (44a, 45a), and wherein said second driving part (50, 51, 65, 66, 67) comprises a second cam section (50a, 51a) and a second movable member (28, 29) movable along said second cam section (50a, 51a).

3. A magneto-optical disc recording and/or reproducing apparatus as claimed in claim 2 wherein said second cam section (50a, 51a) is larger in the angle of inclination than said first cam section (44a, 45a).

4. A magneto-optical disc recording and/or reproducing apparatus as claimed in claim 2 or 3 wherein said driving means include a movable member moved in an opposite direction to the disc cartridge inserting direction as the disc cartridge (201) is inserted into said cartridge holder (77), said first and second cam sections (44a, 45a, 50a, 51a) being formed on said movable member (28, 29).

5. A magneto-optical disc recording and/or reproducing apparatus as claimed in any one of the preceding claims, further comprising controlling means (112) for being abutted against said rotational driving means (1) for controlling the amount of upward movement of said rotational driving means (1).

6. A magneto-optical disc recording and/or reproducing apparatus as claimed in claim 5 wherein said first driving part (36, 37, 44, 45, 6, 7) and said rotational driving means (1) comprise a first cam section (44a, 45a) provided on one of said first driving part (36, 37, 44, 45, 6, 7) and said rotational driving means (1) and a first movable part movable along said first cam section (44a, 45a) and provided on the other of said first driving part (36, 37, 44, 45, 6, 7) and said rotational driving means (1), and wherein said second driving part (50, 51, 65, 66, 67) and said positioning means (63, 64) comprise a second cam section (50a, 51a) provided on one of said second driving part (50, 51, 65, 66, 67) and said positioning means (63, 64) and a second movable part movable along said second cam section (50a, 51a) and provided on the other of said second driving part (50, 51, 65, 66, 67) and said positioning means (63, 64).

7. A magneto-optical disc recording and/or reproducing apparatus as claimed in claim 5 or 6 wherein said driving means further include biasing means for biasing said first movable part towards said contolling means (112).

8. A magneto-optical disc recording and/or reproducing apparatus as claimed in any one of the preceding claims wherein said driving means further include a base having said first and said second driving parts mounted thereon, said base also having said positioning means (63, 64) mounted thereon.

9. A magneto-optical disc recording and/or reproducing apparatus as claimed in any one of the preceding claims wherein said first driving part (36, 37, 44, 45, 6, 7) includes a first cam section (44a, 45a) and said second driving part (50, 51, 65, 66, 67) includes a second cam section (50a, 51a), said second cam section (50a, 51a) being larger in the angle of inclination than said first cam section (44a, 45a).

10. A magneto-optical disc recording and/or reproducing apparatus as claimed in any one of the preceding claims, further comprising
a cartridge holder (77) secured at a predetermined position within the loading device and adapted for holding the disc cartridge (201) inserted therein, and
a capturing unit provided within said cartridge holder (77) for automatically capturing the disc cartridge (201) introduced to a predetermined position within the cartridge holder (77) into said cartridge holder (77).

11. A magneto-optical disc recording and/or reproducing apparatus as claimed in any one of the preceding claims wherein said positioning means (63, 64) includes an adjustment unit for adjusting the tilt of said rotational driving means (1).

12. A magneto-optical disc recording and/or reproducing apparatus as claimed in any one of the preceding claims further comprising
a stationary member mounted on a chassis, said rotational driving means (1) includes a spindle motor (1) and a supporting member supporting said spindle motor, said positioning means (63, 64) includes a positioning pin mounted on one of said stationary member and said supporting member and an engaging opening formed in the other of said stationary member and said supporting member.

13. A magneto-optical disc recording and/or reproducing apparatus as claimed in any one of the preceding claims, further comprising
a shutter opening unit provided on said cartridge holder (77) for opening a shutter for said disc cartridge (201).

14. A magneto-optical disc recording and/or reproducing apparatus as claimed in any one of claims 2 to 13 wherein said first and second cam sections (44a, 45a, 50a, 51a) are each made up of an inclined section and a planar section (44b, 45b, 50b, 51b) contiguous to said inclined section and wherein said second cam section (50a, 51a) is larger in the angle of inclination than said first cam.

15. A magneto-optical disc recording and/or reproducing apparatus as claimed in any one of the preceding claims, further comprising
a head device mounted for movement along a locus of movement of the center of the disc contained in said disc cartridge (201) in a direction parallel to the inserting direction of the disc cartridge (201) into said cartridge holder (77),
wherein said rotational driving means (1) is arranged on the locus of movement of the center of the disc contained in the disc cartridge (201) inserted into the cartridge holder (77) along with said head device,
a pair of positioning pins (63, 64) arranged on the opposite side of said cartridge holder (77) with the disc cartridge (201) inserted into the cartridge holder (77) in-between, said positioning pins (63, 64) being engaged in a pair of positioning holes (225, 226) formed in said disc cartridge (201) for positioning the disc cartridge (201) in the horizontal direction, and
an ejection unit provided on said cartridge holder for ejecting said disc cartridge (201) from said cartridge holder (77).

16. A magneto-optical disc recording and/or reproducing apparatus as claimed in claim 15 wherein said driving means include a movable member moved n an opposite direction to the disc cartridge inserting direction as the disc cartridge (201) is inserted into said cartridge holder (77), said first and second cam sections (44a, 45a, 50a, 51a) being formed on said movable member.

## Patentansprüche

1. Aufzeichnungs- und/oder Wiedergabevorrichtung für magneto-optische Platten, die ein Ladegerät für eine Kassette (201), die eine Platte (202) aufnimmt, die drehbar in einem Kassettenhauptkörper (203) enthalten ist, enthält, mit
Drehantriebsmitteln (1) zum Drehantrieb der Platte (202), die in der Kassette (201) enthalten ist,
Mitteln (63, 64) zum Positionieren der Kassette (201) in horizontaler Richtung durch Eingriff in ein Positionierloch (225, 226), das in der Kassette (201) gebildet ist,
**gekennzeichnet durch**
Antriebsmittel, die einen ersten Antriebsteil (36, 37, 44, 45, 6, 7) zum Heben der Drehantriebsmittel (1) und einen zweiten Antriebsteil (50, 51, 65, 66, 67) zum Heben der Positioniermittel (63, 64) besitzt, wobei die Antriebsmittel das zweite Antriebsteil (50, 51, 65, 66, 67) zeitlich vor dem ersten Antriebsteil (36, 37, 44, 45, 6, 7) antreibt zum Eingreifen der Positioniermittel (63, 64) in das Positionierloch (225, 226) in der Kassette (201) zeitlich vor dem Antrieb der Drehantriebsmitteln (1).

2. Aufzeichnungs- und/oder Wiedergabevorrichtung für magneto-optische Platten, wie in Anspruch 1 beansprucht, bei der das erste Antriebsteil (36, 37, 44, 45, 6, 7) einen ersten Steuerkurvenabschnitt (44a, 45a) und eine erstes bewegbares Element, das entlang des ersten Steuerkurvenabschnitts (44a, 45a) bewegbar ist, aufweist und bei der das zweite Antriebsteil (50, 51, 65, 66, 67) einen zweiten Steuerkurvenabschnitt (50a, 51a) und ein zweites bewegbares Element (28, 29), das entlang dem zweiten Steuerkurrvenabschnitt (50a, 51a) bewegbar ist, aufweist.

3. Aufzeichnungs- und/oder Wiedergabevorrichtung für magneto-optische Platten, wie in Anspruch 2 beansprucht, bei der der zweite Steuerkurvenabschnitt (50a, 51a) einen größeren Schrägstellungswinkel als der erste Steuerkurvenabschnitt (44a, 45a) aufweist.

4. Aufzeichnungs- und/oder Wiedergabevorrichtung für magneto-optische Platten, wie in Anspruch 2 oder 3 beansprucht, bei der die Antriebsmittel ein bewegbares Element beinhalten, das in eine entgegengesetzte Richtung zu der Kassetteneinführrichtung, in der die Kassette (201) in den Kassettenhalter (77) eingeführt wird, bewegbar ist, wobei der erste und der zweite Steuerkurvenabschnitt (44a, 45a, 50a, 51a) auf dem bewegbaren Element (28, 29) gebildet sind.

5. Aufzeichnungs- und/oder Wiedergabevorrichtung für magneto-optische Platten, wie in einem der vorhergehenden Ansprüche beansprucht, ferner mit Steuermitteln (112) zum Anstoßen gegen die Drehantriebsmittel (1) zum Steuern des Betrags der Aufwärtsbewegung der Drehantriebsmittel (1).

6. Aufzeichnungs- und/oder Wiedergabevorrichtung für magneto-optische Platten, wie in Anspruch 5 beansprucht, bei der das erste Antriebsteil (36, 37, 44, 45, 6, 7) und die Drehantriebsmittel (1) einen ersten Steuerkurrvenabschnitt (44a, 45a), der auf dem ersten Antriebsteil (36, 37, 44, 45, 6, 7) oder dem Drehantriebsmittel (1) vorgesehen ist, und ein erstes bewegbares Teil, das entlang dem ersten Steuerkurvenabschnitt (44a, 45a) bewegbar ist und das auf dem anderen von dem ersten Antriebsteil (36, 37, 44, 45, 6, 7) und dem Drehantrieb (1) vorgesehen ist, aufweist und bei der das zweite Antriebsteil (50, 51, 65, 66, 67) und das Positioniermittel (63, 64) einen zweiten Steuerkurvenabschnitt (50a, 51a), der auf dem zweiten Antriebsteil (50, 51, 65, 66, 67) oder den Positioniermitteln (63, 64) vorgesehen ist, und ein zweites bewegbares Teil, das entlang dem zweiten Steuerkurvenabschnitt (50a, 51a) bewegbar ist und das auf dem anderen von dem zweiten Antriebsteil (50, 51, 65, 66, 67) und dem Positioniermittel (63, 64) vorgesehen ist, aufweist.

7. Aufzeichnungs- und/oder Wiedergabevorrichtung für magneto-optische Platten, wie in einem der Ansprüche 5 oder 6 beansprucht, bei der das Antriebsmittel ferner Vorspannmittel zum Vorspannen des ersten bewegbaren Teils gegen das Steuermittel (112) beinhaltet.

8. Aufzeichnungs- und/oder Wiedergabevorrichtung für magneto-optische Platten, wie in einem der vorhergehenden Ansprüche beansprucht, bei der die Antriebsmittel ferner eine Basis beinhalten, auf der das erste und das zweite Antriebsteil befestigt ist, wobei auf der Basis auch die Positioniermittel (63, 64) befestigt sind.

9. Aufzeichnungs- und/oder Wiedergabevorrichtung für magneto-optische Platten, wie in einem der vorhergehenden Ansprüche beansprucht, bei der das erste Antriebsteil (36, 37, 44, 45, 6, 7) einen ersten Steuerkurvenabschnitt (44a, 45a) beinhaltet und das zweite Antriebsteil (50, 51, 65, 66, 67) einen zweiten Steuerkurvenabschnitt (50a, 51a) beinhaltet, wobei der zweite Steuerkurvenabschnitt (50a, 51a) einen größeren Schrägstellungswinkel als der erste Steuerkurvenabschnitt (44a, 45a) aufweist.

10. Aufzeichnungs- und/oder Wiedergabevorrichtung für magneto-optische Platten, wie in einem der vorhergehenden Ansprüche beansprucht, ferner mit einem Kassettenhalter (77), der bei einer vorbestimmten Position innerhalb des Ladegeräts gesichert ist und zum Halten der darin eingeführten Kassette (201) ausgebildet ist, und einer Aufnahmeeinheit, die innerhalb des Kassettenhalters (77) vorgesehen ist zum automatischen Aufnehmen der Kassette (201), die in eine vorbestimmte Position innerhalb des Kassettenhalters (77) eingeführt ist, in dem Kassettenhalter (77).

11. Aufzeichnungs- und/oder Wiedergabevorrichtung für magneto-optische Platten, wie in einem der vorhergehenden Ansprüche beansprucht, bei der die Positioniermittel (63, 64) eine Einstelleinheit zum Einstellen der Schrägstellung der Drehantriebsmittel (1) beinhaltet.

12. Aufzeichnungs- und/oder Wiedergabevorrichtung für magneto-optische Platten, wie in einem der vorhergehenden Ansprüche beansprucht, ferner mit einem stationären Element, das auf einem Chassis befestigt ist, wobei die Drehantriebsmittel (1) einen Spindelmotor (1) und ein Lagerelement zum Lagern des Spindelmotors beinhaltet, wobei die Positioniermittel (63, 64) einen Positionierpin, der auf dem stationären Element oder dem Lagerelement befestigt ist, und eine Eingriffsöffnung, die in dem anderen von dem stationären Element und dem Lagerelement gebildet ist, beinhalten.

13. Aufzeichnungs- und/oder Wiedergabevorrichtung für magneto-optische Platten, wie in einem der vorhergehenden Ansprüche beansprucht, ferner mit einer Verschlußöffnungseinheit, die auf dem Kassettenhalter (77) vorgesehen ist, zum Öffnen eines Verschlusses für die Kassette (201).

14. Aufzeichnungs- und/oder Wiedergabevorrichtung für magneto-optische Platten, wie in einem der Ansprüche 2 bis 13 beansprucht, bei der der erste und der zweite Steuerkurvenabschnitt (44a, 45a, 50a, 51a), jeweils aus einem abgeschrägten Abschnitt und einem ebenen Abschnitt (44b, 45b, 50b, 51b) der benachbart zu dem abgeschrägten Abschnitt ist, gebildet sind und bei der der zweite Steuerkurvenabschnitt (50a, 51a) einen größeren Schrägstellungswinkel als der erste Steuerkurvenabschnitt aufweist.

15. Aufzeichnungs- und/oder Wiedergabevorrichtung für magneto-optische Platten, wie in einem der vorhergehenden Ansprüche beansprucht, ferner mit
einem Kopfgerät, das für eine Bewegung entlang einer Bewegungsortskurve in der Mitte der Platte, die in der Kassette (201) enthalten ist, in einer Richtung parallel zu der Einführrichtung der Kassette (201) in den Kassettenhalter (77) befestigt ist,
wobei das Drehantriebsmittel (1) auf der Bewegungsortskurve in der Mitte der Platte, die in der Kassette (201) enthalten ist, die in den Kassettenhalter (77) eingeführt ist, zusammen mit dem Kopfgerät angeordnet ist,
einem Paar Positionierpins (63, 64), die dem Kassettenhalter (77) gegenüberliegend angeordnet sind, wobei die Kassette (201) in den Kassettenhalter (77) eingeführt ist, der dazwischen angeordnet ist, wobei die Positionierpins (63, 64) im Eingriff mit einem Paar Positionierlöchern (225, 226) sind, die in der Kassette (201) zum Positionieren der Kassette (201) in horizontaler Richtung gebildet sind, und
eine Ausstoßeinheit, die auf dem Kassettenhalter vorgesehen ist, zum Ausstoßen der Kassette (201) aus dem Kassettenhalter (77).

16. Aufzeichnungs- und/oder Wiedergabevorrichtung für magneto-optische Platten, wie in Anspruch 15 beansprucht, bei der die Antriebsmittel ein bewegbares Element beinhalten, das in eine zu der Kassetteneinführrichtung, wenn die Kassette (201) in den Kassettenhalter (77) eingeführt wird, entgegengesetzte Richtung einführbar ist, wobei der erste und der zweite Steuerkurvenabschnitt (44a, 45a, 50a, 51a) auf dem bewegbaren Element gebildet sind.

## Revendications

1. Appareil d'enregistrement et/ou de reproduction à disque magnéto-optique contenant un dispositif de chargement de cartouche à disque pour une cartouche à disque (201) ayant un disque (202) contenu de manière rotative dans un corps principal de cartouche (203), comprenant :
des moyens d'entraînement en rotation (1) pour entraîner le disque (202) en rotation contenu dans ladite cartouche à disque (201),
des moyens (63, 64) pour positionner ladite cartouche à disque (201) dans la direction horizontale en étant introduits dans un trou de positionnement (225, 226) formé dans ladite cartouche à disque (201), caractérisé par :
des moyens d'entraînement ayant une première partie d'entraînement (36, 37, 44, 45, 6, 7) pour élever lesdits moyens d'entraînement en rotation (1) et une seconde partie d'entraînement (50, 51, 65, 66, 67) pour élever lesdits moyens de positionnement (63, 64), lesdits moyens d'entraînement ayant une seconde partie d'entraînement (50, 51, 65, 66, 67) entraînée à l'avance d'un point de vue temporel par rapport à ladite première partie d'entraînement (36, 37, 44, 45, 6, 7) pour introduire lesdits moyens de positionnement (63, 64) dans ledit trou de positionnement (225, 226) dans ladite cartouche à disque (201) à l'avance d'un point de vue temporel par rapport à l'entraînement desdits moyens d'entraînement en rotation (1).

2. Appareil d'enregistrement et/ou de reproduction à disque magnéto-optique selon la revendication 1, dans lequel ladite première partie d'entraînement (36, 37, 44, 45, 6, 7) comprend une première partie formant came (44a, 45a) et un premier élément mobile, mobile le long de ladite première partie formant came (44a, 45a), et dans lequel ladite seconde partie d'entraînement (50, 51, 65, 66, 67) comprend une seconde partie formant came (50a, 51a) et un second élément mobile (28, 29), mobile le long de ladite seconde partie formant came (50a, 51a).

3. Appareil d'enregistrement et/ou de reproduction à disque magnéto-optique selon la revendication 2, dans lequel ladite seconde partie formant came (50a, 51a) a un angle d'inclinaison plus grand que ladite première partie formant came (44a, 45a).

4. Appareil d'enregistrement et/ou de reproduction à disque magnéto-optique selon la revendication 2 ou 3, dans lequel lesdits moyens d'entraînement comprennent un élément mobile déplacé dans le sens opposé au sens d'insertion de la cartouche à disque lorsque l'on insère la cartouche à disque (201) dans ledit support de cartouche (77), lesdites premières et secondes parties formant cames (44a, 45a, 50a, 51a) étant formées sur ledit élément mobile (28, 29).

5. Appareil d'enregistrement et/ou de reproduction à disque magnéto-optique selon l'une quelconque des revendications précédentes, comprenant, de plus, des moyens de commande (112) venant en butée contre lesdits moyens d'entraînement en rotation (1) pour commander la quantité de déplacement vers le haut desdits moyens d'entraînement en rotation (1).

6. Appareil d'enregistrement et/ou de reproduction à disque magnéto-optique selon la revendication 5, dans lequel ladite première partie d'entraînement (36, 37, 44, 45, 6, 7) et lesdits moyens d'entraînement en rotation (1) comprennent une première partie formant came (44a, 45a) disposée sur l'un de ladite première partie d'entraînement (36, 37, 44, 45, 6, 7) et desdits moyens d'entraînement en rotation (1) et une première partie mobile, mobile le long de ladite première partie formant came (44a, 45a) et disposée sur l'autre de ladite première partie d'entraînement (36, 37, 44, 45, 6, 7) et desdits moyens d'entraînement en rotation (1), et dans lequel ladite seconde partie d'entraînement (50, 51, 65, 66, 67) et lesdits moyens de positionnement (63, 64) comprennent une seconde partie formant came (50a, 51a) disposée sur l'un de ladite seconde partie d'entraînement (50, 51, 65, 66, 67) et desdits moyens de positionnement (63, 64) et une seconde partie mobile, mobile le long de ladite seconde partie formant came (50a, 51a) et disposée sur l'autre de ladite seconde partie d'entraînement (50, 51, 65, 66, 67) et desdits moyens de positionnement (63, 64).

7. Appareil d'enregistrement et/ou de reproduction à disque magnéto-optique selon la revendication 5 ou 6, dans lequel lesdits moyens d'entraînement comprennent, de plus, des moyens de poussée pour pousser ladite première partie mobile vers lesdits moyens de commande (112).

8. Appareil d'enregistrement et/ou de reproduction à disque magnéto-optique selon l'une quelconque des revendications précédentes, dans lequel lesdits moyens d'entraînement comprennent, de plus, une base sur laquelle lesdites première et seconde parties d'entraînement sont montées, lesdits moyens de positionnement (63, 64) étant également montés sur ladite base.

9. Appareil d'enregistrement et/ou de reproduction à disque magnéto-optique selon l'une quelconque des revendications précédentes, dans lequel ladite première partie d'entraînement (36, 37, 44, 45, 6, 7) comprend une première partie formant came (44a, 45a) et ladite seconde partie d'entraînement (50, 51, 65, 66, 67) comprend une seconde partie formant came (50a, 51a), ladite seconde partie formant came (50a, 51a) ayant un angle d'inclinaison plus grand que ladite première partie formant came (44a, 45a).

10. Appareil d'enregistrement et/ou de reproduction à disque magnéto-optique selon l'une quelconque des revendications précédentes, comprenant, de plus :
un support de cartouche (77) fixé à une position prédéterminée à l'intérieur du dispositif de chargement et conçu pour maintenir la cartouche à disque (201) insérée en son sein, et
une unité de prise disposée à l'intérieur dudit support de cartouche (77) pour prendre automatiquement la cartouche à disque (201) introduite à une position prédéterminée à l'intérieur du support de cartouche (77) dans ledit support de cartouche (77).

11. Appareil d'enregistrement et/ou de reproduction à disque magnéto-optique selon l'une quelconque des revendications précédentes, dans lequel lesdits moyens de positionnement (63, 64) comprennent une unité de réglage pour régler l'inclinaison desdits moyens d'entraînement en rotation (1).

12. Appareil d'enregistrement et/ou de reproduction à disque magnéto-optique selon l'une quelconque des revendications précédentes, comprenant, de plus :
un élément immobile monté sur un châssis, lesdits moyens d'entraînement en rotation (1) comprennent un moteur de broche (1) et un élément de support supportant ledit moteur de broche, lesdits moyens de positionnement (63, 64) comprennent un ergot de positionnement monté sur l'un dudit élément immobile et dudit élément de support et une ouverture d'introduction formée dans l'autre dudit élément immobile et dudit élément de support.

13. Appareil d'enregistrement et/ou de reproduction à disque magnéto-optique selon l'une quelconque des revendications précédentes, comprenant de plus :
une unité d'ouverture d'obturateur disposée sur ledit support de cartouche (77) pour ouvrir un obturateur pour ladite cartouche à disque (201).

14. Appareil d'enregistrement et/ou de reproduction à disque magnéto-optique selon l'une quelconque des revendications 2 à 13, dans lequel lesdites premières et secondes parties formant cames (44a, 45a, 50a, 51a) sont constituées, chacune, par une partie inclinée et par une partie plane (44b, 45b, 50b, 51b) contiguë à ladite partie inclinée et dans lequel ladite seconde partie formant came (50a, 51a) a un angle d'inclinaison plus grand que ladite première came.

15. Appareil d'enregistrement et/ou de reproduction à disque magnéto-optique selon l'une quelconque des revendications précédentes, comprenant de plus :
un dispositif formant tête monté pour un déplacement le long d'un lieu géométrique de déplacement du centre du disque contenu dans ladite cartouche à disque (201) dans une direction parallèle au sens d'insertion de la cartouche à bande (201) dans ledit support de cartouche (77),
dans lequel lesdits moyens d'entraînement en rotation (1) sont agencés sur le lieu géométrique de déplacement du centre du disque contenu dans la cartouche à disque (201) insérée dans le support de cartouche (77) en même temps que ledit dispositif formant tête,
deux ergots de positionnement (63, 64) agencés sur le côté opposé dudit support de cartouche (77), la cartouche à disque (201) étant insérée dans le support de cartouche (77) entre eux, lesdits ergots de positionnement (63, 64) étant introduits dans deux trous de positionnement (225, 226) formés dans ladite cartouche à disque (201) pour positionner la cartouche à disque (201) dans la direction horizontale, et
une unité d'éjection disposée sur ledit support de cartouche pour éjecter ladite cartouche à disque (201) dudit support de cartouche (77).

16. Appareil d'enregistrement et/ou de reproduction à disque magnéto-optique selon la revendication 15, dans lequel lesdits moyens d'entraînement comprennent un élément mobile déplacé dans un sens opposé au sens d'insertion de la cartouche à disque lorsque l'on insère la cartouche à disque (201) dans ledit support de cartouche (77), lesdites premières et secondes parties formant cames (44a, 45a, 50a, 51a) étant formées sur ledit élément mobile.
